(19) Europäisches Patentamt
European Patent Office
Office européen des brevets

(11) **EP 3 251 955 B1**

(12) **FASCICULE DE BREVET EUROPEEN**

(45) Date de publication et mention
de la délivrance du brevet:
**26.09.2018  Bulletin 2018/39**

(51) Int Cl.:
***B64D 43/00*** *(2006.01)*       ***B64C 27/04*** *(2006.01)*

(21) Numéro de dépôt: **17165759.6**

(22) Date de dépôt: **10.04.2017**

(54) **PROCÉDÉ, DISPOSITIF D'AIDE AU PILOTAGE D'UN AÉRONEF, ET AÉRONEF**

VERFAHREN UND HILFSVORRICHTUNG ZUR STEUERUNG EINES LUFTFAHRZEUGS, UND LUFTFAHRZEUG

A METHOD AND A DEVICE FOR ASSISTING THE PILOTING OF AN AIRCRAFT, AND AN AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.05.2016  FR 1600871**

(43) Date de publication de la demande:
**06.12.2017  Bulletin 2017/49**

(73) Titulaire: **Airbus Helicopters**
**13725 Marignane Cedex (FR)**

(72) Inventeurs:
 • **CASOLARO, Didier**
  **13340 ROGNAC (FR)**
 • **ABBAS, Grégory**
  **13012 MARSEILLE (FR)**

(74) Mandataire: **GPI & Associés**
 **EuroParc de Pichaury**
 **Bâtiment B2 - 1er Etage**
 **1330, rue Guillibert de la Lauzière**
 **13856 Aix-en-Provence Cedex 3 (FR)**

(56) Documents cités:
 **EP-A1- 2 518 582     FR-A1- 2 756 256**
 **FR-A1- 2 809 082     FR-A1- 2 973 340**

**Description**

La présente invention concerne un procédé et un dispositif d'aide au pilotage d'un aéronef, ainsi qu'un aéronef. En particulier, l'aéronef est un giravion muni d'un rotor participant au moins à la sustentation voire à la propulsion de ce giravion.

Les giravions sont généralement pourvus d'une installation motrice comprenant au moins un moteur, tel qu'un moteur à explosion de type turbomoteur à turbine libre. La puissance est alors prélevée sur un étage basse pression de chaque turbine libre qui tourne par exemple entre 20 000 et 50 000 tours par minute. Par suite, l'installation motrice inclut une boîte de réduction de vitesse pour lier les turbines libres au rotor principal puisque la vitesse de rotation de ce rotor est sensiblement comprise entre 200 et 400 tours par minute. Une telle boîte de réduction de vitesse est dénommée « boîte de transmission principale de puissance ».

Les limitations thermiques d'un moteur, et les limitations en couple d'une boîte de transmission principale, permettent de définir une enveloppe de fonctionnement du moteur englobant de multiples régimes de fonctionnement. En particulier, un moteur de giravion peut fonctionner selon au moins un des régimes normaux suivants:

- le régime de décollage correspondant à un niveau de couple pour la boîte de transmission principale et un échauffement du moteur admissibles pendant un temps limité sans dégradation notable, ce régime de décollage étant défini par une puissance maximale au décollage PMD et une durée d'utilisation de cette puissance maximale au décollage généralement de l'ordre de cinq minutes,

- le régime maximal continu, ce régime maximal continu étant défini par une puissance maximale en continu PMC correspondant environ à 90% de la puissance maximale au décollage PMD et par une durée d'utilisation de cette puissance maximale en continu généralement illimitée,

- le régime de puissance étendue, ce régime de puissance étendue étant défini par une puissance étendue sensiblement équivalente voire égale à la puissance maximale au décollage PMD et par une durée d'utilisation de cette puissance étendue de l'ordre de trente minutes,

- un régime transitoire buté par la régulation de l'installation motrice défini par une puissance maximale en transitoire PMT.

Sur un giravion bimoteur, l'enveloppe de fonctionnement englobe aussi des régimes de surpuissance d'urgence, uniquement utilisés lorsque l'un des deux moteurs est en panne. Un moteur de giravion peut alors fonctionner selon au moins un des régimes de surpuissance d'urgence suivants:

- le premier régime d'urgence dénommé parfois « OEI 30" », ce premier régime d'urgence étant défini par une puissance de super urgence PSU souvent égale à environ 112% à 120% de la puissance maximale au décollage PMD et par une durée d'utilisation de cette puissance de super urgence PSU généralement de l'ordre trente secondes consécutives au maximum, la puissance de super urgence étant classiquement utilisable trois fois pendant un vol,

- le deuxième régime d'urgence dénommé parfois « OEI 2' », ce deuxième régime d'urgence étant défini par une puissance maximale d'urgence PMU égale à environ 105% à 110% de la de la puissance maximale au décollage PMD et par une durée d'utilisation de cette puissance maximale d'urgence PMU de l'ordre deux minutes consécutives au maximum ;

- le troisième régime d'urgence dénommé parfois « OEI cont », ce troisième régime d'urgence étant défini par une puissance intermédiaire d'urgence PIU sensiblement égale à la puissance maximale au décollage PMD et par une durée d'utilisation illimitée de cette puissance intermédiaire d'urgence PIU pour le reste du vol après la panne du moteur.

Pour chacun des régimes définis ci-dessus, un motoriste établit, par calculs ou par essais, les courbes de puissance disponible d'un moteur en fonction de l'altitude et de la température extérieure.

De plus, le motoriste détermine des limitations de chaque moteur permettant d'obtenir les puissances PMC, PMD, PMT, PSU, PMU, PIU correspondant à chaque régime précité et une durée de vie acceptable. Sur un turbomoteur, ces limites sont généralement surveillées par l'intermédiaire de trois paramètres de surveillance : la vitesse de rotation du générateur de gaz du turbomoteur, le couple moteur et la température des gaz à l'entrée de la turbine libre basse pression du turbomoteur respectivement dénommés Ng, Cm et T45 par l'homme du métier. Si le turbomoteur comporte un étage de turbine haute pression, la température des gaz à l'entrée de la turbine haute pression dénommée TET peut être utilisée. Cette température des gaz à l'entrée de la turbine haute pression TET est difficilement mesurable et par suite parfois calculée à partir de la température des gaz à l'entrée de la turbine libre T45.

Ainsi, pour chaque régime de l'enveloppe de fonctionnement du moteur, le motoriste établit des limites pour chaque paramètre de surveillance. Ces limites peuvent varier en fonction des conditions extérieures à savoir la pression extérieure P0 et la température extérieure T0 de l'air à l'extérieur de l'aéronef.

Par exemple, pour un aéronef monomoteur le motoriste détermine:

- des premières limites $T4_{\text{lim}PMD}$, $T4_{\text{lim}PMC}$, et $T4_{\text{lim}PMT}$ correspondant à la température des gaz à l'entrée de la turbine libre basse pression du moteur lorsque ce moteur développe respectivement la puissance maximale au décollage ainsi que la puissance maximale continue et la puissance maximale en régime transitoire, ces premières limites étant variables en fonction des conditions extérieures,

- des deuxièmes limites $NG_{\text{lim}PMD}$, $NG_{\text{lim}PMC}$, et $NG_{\text{lim}PMT}$ correspondant à la vitesse de rotation du générateur de gaz du moteur lorsque ce moteur développe respectivement la puissance maximale au décollage ainsi que la puissance maximale continue et la puissance maximale en régime transitoire, ces deuxièmes limites étant variables en fonction des conditions extérieures,

- des troisièmes limites $TQM_{\text{lim}PMD}$, $TQM_{\text{lim}PMC}$, et $TQM_{\text{lim}PMT}$ correspondant au couple exercé sur l'arbre de sortie du moteur lorsque ce moteur développe respectivement la puissance maximale au décollage ainsi que la puissance maximale continue et la puissance maximale en régime transitoire, ces troisièmes limites étant variables en fonction des conditions extérieures.

Les troisièmes limites peuvent être mesurées par analogie à l'aide du couple exercé au niveau de la boîte de transmission principale, au niveau de l'entrée de cette boîte de transmission principale et/ou de son mât d'entraînement du rotor principal par exemple.

Par exemple, pour un aéronef monomoteur le constructeur détermine de plus des quatrièmes limites $TQ_{\text{lim}PMD}$, $TQ_{\text{lim}PMC}$, et $TQ_{\text{lim}PMT}$ correspondant au couple exercé au niveau de la boîte de transmission principale, par exemple au niveau de son mât d'entraînement du rotor principal, lorsque le moteur développe respectivement la puissance maximale au décollage ainsi que la puissance maximale continue et la puissance maximale en régime transitoire.

Ces différentes limites sont établies par le motoriste et le constructeur de l'aéronef, sous la forme de tableaux, de base de données ou d'équations par exemple.

Le pilote d'un giravion doit alors contrôler son aéronef en prenant en considération les limites adéquates afin de respecter les consignes du motoriste et protéger les ensembles dynamiques de l'hélicoptère.

A cet effet, un giravion comporte de nombreux instruments sur le tableau de bord, instruments qui sont pour la plupart représentatifs du fonctionnement de l'installation motrice du giravion. Pour chaque paramètre de surveillance, le giravion peut comporter un indicateur présentant la valeur courante du paramètre de surveillance ainsi que sa limite. Un tel indicateur est dénommé par commodité « indicateur individuel ».

Pour faciliter le pilotage, un instrument est utilisé pour uniquement afficher une information relative au paramètre de surveillance le plus limitant.

Le document FR2749545 a pour objet un indicateur de pilotage présentant des informations relatives au paramètre de surveillance d'un turbomoteur le plus proche de sa valeur limite. Les informations relatives aux limitations à respecter sont ainsi regroupées sur un affichage unique, en permettant, d'une part, d'effectuer une synthèse et de présenter uniquement le résultat de cette synthèse afin de simplifier la tâche du pilote et, d'autre part, de gagner de la place sur la planche de bord. On obtient ainsi un « paramètre limitant », parmi lesdits paramètres de surveillance du turbomoteur dont la valeur courante est la plus proche de la valeur limite pour ledit paramètre. Pour cette raison, un tel indicateur est connu sous la dénomination « instrument de première limitation » correspondant à l'acronyme « IPL ». L'expression « First Limitation Instrument » correspondant à l'acronyme « FLI » est parfois utilisée à cet effet en langue anglaise.

D'autres réalisations permettent d'afficher la valeur du paramètre limitant en marge de pas collectif des pales du rotor principal du giravion.

Par exemple, le document FR 2 756 256 suggère de présenter sur un écran d'affichage la marge de puissance disponible pour l'installation motrice avant d'atteindre une limite sur une échelle graduée en équivalent de pas collectif des pales du rotor principal, l'échelle défilant devant un index représentatif du pas collectif courant desdites pales. Par exemple, l'index est en vis-à-vis d'une première graduation, la limite du paramètre limitant à une puissance donnée étant en vis-à-vis d'une deuxième graduation supérieure à la première graduation. Le pilote visualise alors la marge de pas collectif à sa disposition avant d'atteindre ladite puissance donnée.

Selon ce document FR 2 756 256 la valeur des paramètres de surveillance est déterminée à chaque instant de calcul. Dès lors, la marge de chaque paramètre de surveillance par rapport à sa limite est déterminée.

Par suite, chaque marge d'un paramètre de surveillance est convertie en une marge de puissance.

La marge de puissance la plus faible est alors sélectionnée puis transformée en une marge de pas collectif. La somme de cette marge de pas collectif et du pas collectif courant permet d'obtenir une limite de pas collectif à afficher.

Un tel indicateur est très efficace, en particulier durant des phases de fonctionnement stabilisé.

Toutefois, durant des phases transitoires dites « dynamiques », un pilote peut manoeuvrer des commandes de vol pour déplacer rapidement l'aéronef. Durant ces phases dynamiques, l'indicateur peut fournir momentanément des marges de pas collectif erronées. Ces marges de pas collectifs peuvent par exemple être surestimées suite à une augmentation rapide du pas collectif des pales du rotor principal, ou sous-estimée suite à une baisse rapide du pas collectif.

Un tel inconvénient est accepté par les pilotes, en considérant que ces phases dynamiques brutales sont peu courantes.

De plus, le giravion conserve usuellement les indicateurs individuels usuels en plus de l'indicateur de première limitation pour permettre la surveillance de chaque paramètre de surveillance pris isolément.

Les documents FR 2973340, EP 2518582 et FR 28029082 sont aussi connus.

La présente invention a alors pour objet de proposer un procédé et un dispositif d'aide au pilotage alternatif visant à atteindre une précision optimisée.

L'invention concerne donc un procédé d'aide au pilotage d'un aéronef, l'aéronef étant muni d'une installation motrice comportant au moins un moteur et d'un rotor principal participant au moins partiellement à la sustentation et/ou à la propulsion de cet aéronef, chaque moteur étant régulé par un moyen de régulation en fonction d'une consigne, l'installation motrice étant surveillée en déterminant une valeur d'une pluralité de paramètres de surveillance prédéterminés, ledit aéronef étant un giravion,.

Par exemple et lorsque le moteur est un turbomoteur, les paramètres de surveillance peuvent inclure la vitesse de rotation du générateur de gaz du turbomoteur, le couple moteur du turbomoteur et la température des gaz à l'entrée de la turbine libre basse pression du turbomoteur. Si le turbomoteur comporte un étage de turbine haute pression, la température des gaz à l'entrée de la turbine haute pression dénommée TET peut être utilisée. Lorsque l'installation motrice comporte de plus une boîte de transmission de puissance reliée à au moins un moteur et au rotor principal, les paramètres de surveillance peuvent inclure une couple exercé dans cette boîte de transmission de puissance.

Le pas collectif des pales du rotor principal peut par exemple être piloté par un moyen de commande manoeuvrable par un pilote, tel qu'un levier par exemple. Le moyen de commande peut être couplé à une loi d'effort. La position de ce moyen de commande permet par exemple d'évaluer le pas collectif des pales du rotor principal.

Pour au moins un régime de fonctionnement dudit au moins un moteur, ce procédé comprend les étapes suivantes :

- détermination d'une marge de puissance dite « marge de puissance limitante » de ladite installation motrice par rapport à une limite de puissance au dit régime de fonctionnement,

- transformation de la marge de puissance limitante en une marge de pas collectif pour ledit régime de fonctionnement, la marge de pas collectif représentant la marge entre un pas collectif courant de pales dudit rotor principal et une limite de pas collectif de ces pales du rotor principal,

- détermination de ladite limite de pas collectif et affichage de ladite limite de pas collectif

Par exemple, l'enseignement du document FR 2 756 256 peut être utilisé pour déterminer la marge de puissance limitante et déterminer la limite de pas collectif à partir de la marge de pas collectif.

En outre, la marge de pas collectif est déterminée en appliquant un algorithme minorant la marge de pas collectif par rapport à une marge de pas collectif réelle au régime de fonctionnement proportionnelle à la marge de puissance limitante lorsque la marge de puissance limitante est non nulle pour anticiper un dépassement de ladite consigne induit par un moyen de régulation dudit moteur, ladite marge de pas collectif étant nulle lorsque la marge de puissance limitante est nulle.

Lors d'une phase transitoire dynamique, un pilote peut déplacer rapidement le moyen de commande du pas collectif des pales du rotor principal pour utiliser la totalité de la marge de pas collectif affichée.

Le moyen de régulation régule en conséquence le débit de carburant transmis au moteur. Toutefois, si la manoeuvre du pilote est rapide, le moteur risque par exemple de dépasser une de ses limites pendant un temps court avant d'atteindre la puissance requise. Un tel phénomène est parfois dénommé « overshoot » en langue anglaise.

L'invention tend à éviter un tel dépassement transitoire en minorant la marge de pas collectif affichée, par rapport à la marge de pas collectif réelle qui est réellement disponible, du moins tant que la marge de puissance limitante n'est pas nulle.

Dès lors, l'expression « marge de pas collectif » fait référence à la marge de pas collectif utilisée pour déterminer la limite de pas collectif affichée. Par contre, l'expression « marge de pas collectif réelle » fait référence à la marge de pas collectif réellement disponible.

Par exemple, la marge de puissance limitante est transformée en une marge de puissance minorée qui est transformée en la marge de pas collectif.

Selon une autre alternative, la marge de puissance limitante est transformée en une marge de pas collectif réelle, la marge de pas collectif réelle étant minorée pour obtenir la marge de pas collectif.

Selon une autre alternative, la marge de puissance limitante est directement transformée en la marge de pas collectif.

Par exemple, la marge de pas collectif est déterminée en appliquant un algorithme récursif à l'aide d'une relation principale fournissant à chaque instant de calcul courant la marge de pas collectif en fonction du quotient de la marge de puissance limitante et d'un dénominateur, le dénominateur étant égal au produit d'un premier terme et d'un deuxième terme, le premier terme étant fonction du pas collectif courant desdites pales audit instant de calcul courant et de la limite de pas collectif à l'instant de calcul précédent qui précède ledit instant de calcul courant, ledit deuxième terme étant fonction d'au moins un coefficient prédéterminé minorant ladite marge de puissance de l'installation motrice.

Certains arts antérieurs suggèrent que la marge de pas collectif des pales du rotor principal soit égale au produit de la marge de puissance et d'une constante invariable.

Le procédé décrit précédemment suggère au contraire d'utiliser un algorithme récursif basé sur la relation suivante :

$$\Delta\theta = \frac{\Delta Wlim}{A1(\theta_{limit}^{n-1}, \theta^n) * A2(B)}$$

où « $\Delta\theta$ » représente la marge de pas collectif, « $\Delta Wlim$ » représente la marge de puissance limitante, « $A1(\theta_{limit}^{n-1}, \theta^n)$ » représente le premier terme fonction du pas collectif courant $\theta^n$ audit instant de calcul courant et de la limite de pas collectif $\theta_{limit}^{n-1}$ à l'instant de calcul réalisé juste avant ledit instant de calcul courant, « $A2(B)$ » représente le deuxième terme fonction d'au moins un coefficient $B$ prédéterminé minorant ladite marge de puissance de l'installation motrice.

Cet algorithme est donc basé sur une expression factorisée de la marge de pas collectif comprenant la marge de puissance limitante en facteur commun.

Cet algorithme vise à induire qu'une marge de pas collectif nulle induit une marge de puissance nulle et inversement.

Dès lors, la marge de pas collectif est ajoutée au pas collectif courant pour conduire à une limite de pas collectif qui est affichée sur un écran par exemple.

La marge de pas collectif calculée dépend donc d'un coefficient qui tend à minorer cette marge de pas collectif. Le coefficient B est déterminé par essais et choisi de façon à assurer un calcul des marges de pas collectif minorées de façon à ce que, sur manoeuvre de l'équipage, les limitations de l'installation motrice soient toujours respectées.

Dès lors, ce procédé tend à calculer une marge de pas collectif optimisée.

La précision optimisée de la limite de pas collectif finalement obtenue peut tendre à rendre inutile les indicateurs individuels de l'art antérieur, si nécessaire en appliquant des variantes décrites par la suite. En effet, le procédé peut prendre en compte la variation de la vitesse de rotation du rotor principal au travers d'une pénalité de puissance appliquée à la marge de puissance limitante, l'influence d'un rotor auxiliaire ou la variation de la vitesse d'avancement de l'aéronef.

Dès lors, le procédé peut éventuellement être implémenté sur un aéronef tendant à utiliser la technologie dénommée « part time display » en langue anglaise.

Lorsque le procédé permet d'obtenir une information de marge de pas collectif précise pour tout le domaine de vol, les indicateurs individuels ne doivent plus nécessairement être visibles en permanence. Les informations fournies par ces indicateurs individuels peuvent alors apparaître sur requête seulement sur un écran permettant de fournir diverses données, et non pas en permanence.

Par ailleurs, ce procédé peut être utilisé pour déterminer une limite de pas collectif pour divers régimes de fonctionnement des moteurs, au moins deux limites de pas collectif distinctes pouvant être affichées simultanément. L'enseignement du document FR 2 756 256 peut être utilisé.

Le procédé peut de plus comporter une ou plusieurs des caractéristiques qui suivent.

Ainsi, pour déterminer la marge de puissance limitante, le procédé peut comporter les étapes suivantes :

- détermination d'une marge dite « marge individuelle » pour chaque paramètre de surveillance,

- transformation de chaque marge individuelle en une marge de puissance dite « marge de puissance individuelle », ladite marge de puissance limitante étant égale à la marge de puissance individuelle la plus faible.

Eventuellement, les marges de puissance individuelles voire la marge limitante sont fournies par le moyen de régulation du moteur. Un tel moyen de régulation est parfois connu sous l'acronyme « FADEC ».

Par ailleurs, le premier terme peut être déterminé à l'aide de la relation suivante :

$$A1 = \theta_{limit}^{n-1} + \theta^n - 2 * \theta_0$$

où « A1 » représente ledit premier terme, « $\theta_{limit}^{n-1}$ » représente la limite de pas collectif à l'instant de calcul précédent qui précède l'instant de calcul courant, « $\theta^n$ » représente ledit pas collectif courant, « $\theta_0$ » représente une constante relative à un pas collectif de référence, « = » représente le signe de l'égalité, « + » représente le signe de l'addition, « - » représente le signe de la soustraction, « * » représente le signe de la multiplication.

La constante $\theta_0$ relative à un pas collectif de référence peut être invariable et déterminée par essais de façon à ce que l'algorithme récursif converge.

En outre, le deuxième terme peut être déterminé à l'aide de la relation suivante :

$$A2 = B * \sigma * Nr^3$$

où « A2 » représente le deuxième terme, « B » représente ledit coefficient, « $\sigma$ » représente la densité de l'air, « Nr » représente un paramètre relatif à la vitesse de rotation du rotor principal, « * » représente le signe de la multiplication.

La densité de l'air est déterminée à l'aide de la formule suivante :

$$\sigma = \frac{Pco}{Tco}$$

avec :

$$Pco = \frac{P0}{1013.25}$$

$$Tco = \frac{OAT + 273.15}{288.15}$$

où « P0 » représente la pression extérieure exprimée en mBar, « OAT » représente la température extérieure exprimée en degrés Celcius.

Le paramètre Nr relatif à la vitesse de rotation du rotor principal peut être une constante fixe. En particulier, le rotor principal peut être associé à une vitesse de rotation nominale, ce rotor devant tendre à effectuer une rotation à cette vitesse de rotation nominale. Dans cette configuration, le paramètre Nr est égal à la valeur de la vitesse de rotation nominale.

Sur un autre type d'aéronef, le rotor peut être associé à une vitesse de rotation nominale qui varie en fonction de la phase de vol. Dès lors, le paramètre Nr peut être égal à la valeur de la vitesse de rotation nominale correspondant à la phase de vol courante.

Selon une autre variante, le procédé de l'invention prévoit de mesurer une vitesse de rotation au moins proportionnelle à la vitesse de rotation du rotor. Par exemple, le paramètre Nr est égal à chaque instant de calcul à la valeur mesurée de la vitesse de rotation du rotor principal, ou encore au produit d'une constante de proportionnalité et de la valeur mesurée de la vitesse de rotation d'un organe engendrant directement ou indirectement la rotation du rotor principal.

Par ailleurs, la densité « $\sigma$ » peut être corrigée en vol selon des relations connues en fonction de la pression extérieure et de la température extérieure de l'air présent à l'extérieur de l'aéronef.

En effet, la demanderesse note que le pas collectif est relié à la puissance développée par l'installation motrice en vol stabilisé par l'équation suivante :

$$\frac{W}{\sigma \cdot Nr^3} = A + B \cdot (\theta - \theta_0)^2$$

où « $W$ » représente ladite puissance, « $\sigma$ » représente la densité de l'air, « Nr » représente un paramètre relatif à la vitesse de rotation du rotor principal, « $\theta$ » représente le pas collectif courant, « $\theta_0$ » représente une constante relative à un pas collectif de référence.

Cette relation est déterminée empiriquement par essais en vol.

La demanderesse en déduit la relation entre un pas collectif limite et une puissance limite :

$$\frac{W_{\text{limit}}}{\sigma \cdot Nr^3} = A + B \cdot (\theta_{\text{lim}} - \theta_0)^2$$

où « $W_{\text{limit}}$ » représente la puissance limite, « $\sigma$ » représente la densité de l'air, « Nr » représente un paramètre relatif à la vitesse de rotation du rotor principal, « $\theta_{\text{lim}}$ » représente le pas collectif limite, « $\theta_0$ » représente la constante relative à un pas collectif de référence.

On en déduit la relation suivante entre le pas collectif courant $\Theta_{\text{meas}}$ et la puissance courante $W_{\text{meas}}$ :

$$\frac{W_{\text{meas}}}{\sigma \cdot Nr^3} = A + B \cdot (\theta_{\text{meas}} - \theta_0)^2$$

Dès lors, la marge de puissance et la marge de pas collectif sont reliées par la relation suivante :

$$\frac{\Delta W}{\sigma \cdot Nr^3} = B \cdot [(\theta_{\text{lim}} - \theta_0)^2 - (\theta_{\text{meas}} - \theta_0)^2]$$

soit :

$$\Delta \theta = \frac{\Delta Wlim}{B \cdot (\theta_{\text{lim}} + \theta_{\text{meas}} - 2\theta_0)\sigma \cdot Nr^3}$$

où « $\Delta \theta$ » représente la marge de pas collectif, « $\Delta Wlim$ » représente la marge de puissance limitante, « $\theta_{lim}$ » représente la limite de pas collectif, « $\theta_{meas}$ » représente le pas collectif courant, « $\sigma$ » représente la densité de l'air, « Nr » représente un paramètre relatif à la vitesse de rotation du rotor principal, « $\theta_0$ » représente la constante relative à un pas collectif de référence.

En appliquant un algorithme récursif, la série suivante est donc obtenue :

$$\theta_{\text{limit}}^n - \theta^n = \Delta \theta_{\text{limit}}^n = \frac{W_{\text{margin}}^n}{B \cdot \left(\theta_{\text{limit}}^{n-1} + \theta^n - 2\theta_0\right)\sigma \cdot Nr^3}$$

où « $\theta_{limit}^n$ » représente la limite de pas collectif à l'instant de calcul courant, « $\theta_{\text{limit}}^{n-1}$ » représente la limite de pas collectif à l'instant de calcul précédent l'instant de calcul courant, « $\theta^n$ » représente ledit pas collectif courant, « $\Delta\theta_{\text{limit}}^n$ » représente la marge de pas collectif à l'instant de calcul courant, « $W_{\text{margin}}^n$ » représente la marge de puissance limitante à l'instant de calcul courant, « $\theta_0$ » représente une constante relative à un pas collectif de référence, « $\sigma$ » représente la densité de l'air, « Nr » représente un paramètre relatif à la vitesse de rotation du rotor principal.

Par ailleurs, ledit coefficient B peut être une variable sans dimension qui varie en fonction de la vitesse d'avancement de l'aéronef.

En particulier, le coefficient B peut varier en fonction d'une vitesse d'avancement de l'aéronef divisée par une vitesse de référence. La vitesse d'avancement peut être la vitesse dénommée « Indicated Air Speed » en langue anglaise et connue sous l'acronyme IAS.

Pour déterminer les valeurs du coefficient, des vols en paliers stabilisés peuvent être réalisés. Par exemple, le coefficient est égal à 6,25 avec une vitesse d'avancement de 150 noeuds, 7 avec une vitesse d'avancement de 70 noeuds et 8,2 avec une vitesse d'avancement de 40 noeuds.

Eventuellement, préalablement à la transformation de la marge de puissance limitante en une marge de pas collectif, la marge de puissance limitante est réduite selon un pourcentage prédéterminé si la vitesse de rotation du rotor principal diminue à une vitesse prédéterminée pendant un temps prédéterminé.

Le procédé selon l'invention prévoit de transformer une marge de puissance en une marge de pas collectif en utilisant par exemple un algorithme récursif.

Cet algorithme récursif donne de bons résultats durant des phases de vols stabilisés, voire durant des phases de vols dynamiques avec un moteur bien régulé.

Lorsqu'un pilote modifie de manière agressive le pas collectif des pales du rotor principal, la vitesse de rotation du rotor principal peut diminuer. Suite à cette réduction de la vitesse de rotation du rotor principal, le moteur accélère pour maintenir la vitesse de rotation du rotor principal égale à une consigne.

Si la régulation du moteur est relativement peu précise, le moteur accélère en consommant plus de puissance que prévu par les modèles de calcul. Ce phénomène est très rapide et le pilote doit être informé au plus tôt qu'une limite risque d'être dépassée. Afin d'anticiper cette accélération du moteur, un algorithme de détection de la réduction de la vitesse de rotation du rotor principal est utilisé afin de déterminer si une correction préventive de la limite de pas collectif indiquée par l'indicateur doit être appliquée.

Un filtre du premier ordre peut être appliqué à la vitesse de rotation du rotor principal afin de calculer sa variation.

Si la vitesse de rotation du rotor diminue avec une variation supérieure à la vitesse prédéterminée, une pénalité dégressive est appliquée pendant le temps prédéterminé. Par exemple, la vitesse prédéterminée correspond à 4 % d'une vitesse de référence par seconde, le temps prédéterminé étant égal à 0,5 seconde.

Cette caractéristique additionnelle tend à améliorer la précision de la limite de pas collectif.

En outre, le pourcentage appliqué pour réduire la marge de puissance limitante peut décroitre d'un maximum à une valeur nulle sur une période prédéterminée.

Par exemple, la pénalité appliquée est équivalente à une réduction de 25% de la marge de puissance limitante, et est appliquée de façon dégressive voire linéaire pour être nulle au bout de 2 secondes.

Par ailleurs, lors d'une phase de vol agressive prédéterminée de l'aéronef, le procédé peut comporter une étape de gel durant laquelle la limite de pas collectif est maintenue égale à la valeur de cette limite de pas collectif atteinte avant ladite phase de vol agressive.

L'expression « avant ladite phase de vol agressive » désigne l'instant de calcul précédent le début de la phase de vol agressive.

Durant une phase de vol agressive, la limite de pas collectif risque d'être faussement maximisée en raison du temps de réaction du moteur suite à un ordre de commande donné pour piloter le pas des pales du rotor principal.

Pour éviter d'afficher une limite de pas collectif qui sera supérieure à la limite de pas collectif réellement atteinte à la fin de la manoeuvre, par exemple suite à une augmentation rapide du pas collectif des pales du rotor principal, cette caractéristique additionnelle propose de geler la valeur de la limite de pas collectif durant la phase de vol dynamique.

Une phase de vol agressive est éventuellement détectée :

- si le pas collectif des pales du rotor principal varie à une vitesse supérieure à un seuil de variation de vitesse haut prédéterminé, ou

- si le pas collectif des pales du rotor principal varie à une vitesse comprise entre un seuil de variation de vitesse bas prédéterminé et ledit seuil de vitesse haut pendant un seuil de durée, ou

- si une variation de la vitesse de rotation dudit rotor principal est supérieure à un seuil bas et si un organe de commande commandant le pas de pales d'un rotor auxiliaire n'est pas manoeuvré, ou

- si la variation de la vitesse de rotation dudit rotor principal est supérieure à un seuil haut et si ledit organe de commande commandant le pas de pales d'un rotor auxiliaire est manoeuvré.

La relation pas collectif- puissance explicitée précédemment peut être particulièrement précise lors d'une phase de vol stabilisé.

Lors d'une phase transitoire, cette relation peut être moins précise. Pour éviter d'induire en erreur un pilote, la limite de pas collectif est dans ce cas gelée pendant les phases transitoires.

Par exemple, une phase transitoire est une phase de vol dynamique très agressive lorsque le pas collectif des pales du rotor principal varie à une vitesse supérieure au seuil de variation de vitesse haut. Un tel seuil de variation de vitesse haut est par exemple égal à 1.6° par seconde.

La variation du pas collectif du rotor principal peut être déterminée en appliquant un filtre du premier ordre.

En outre, une phase transitoire est une phase de vol dynamique agressive lorsque le pas collectif des pales du rotor principal est compris entre le seuil de variation de vitesse bas et le seuil de vitesse haut pendant un seuil de durée. Un tel seuil de variation de vitesse bas est par exemple égal à 0.4° par seconde, le seuil de durée étant égal à 800 millisecondes.

Par ailleurs, le seuil bas est par exemple égal à un pourcent d'une vitesse nominale du rotor principal par seconde, et le seuil haut est égal à trois pourcents de la vitesse nominale du rotor principal par seconde.

Par ailleurs, l'étape de gel peut être inhibée si une position d'un organe de commande commandant le pas de pales d'un rotor auxiliaire varie à une vitesse de déplacement supérieure à un seuil de vitesse de déplacement.

Un tel organe de commande peut être un palonnier par exemple.

Lors d'une variation rapide de la position de l'organe de commande pour réaliser une manoeuvre dénommée « spot turn » en langue anglaise, la puissance disponible pour entraîner le rotor principal varie rapidement.

Dès lors, cette caractéristique additionnelle propose d'inhiber le gel des limites de pas collectif pour permettre une mise à jour rapide de ces limites.

Eventuellement, l'étape de gel n'est pas inhibée si une position d'un organe de commande commandant le pas de pales d'un rotor auxiliaire varie à une vitesse de déplacement supérieure à un seuil de déplacement, et si le pas collectif des pales du rotor principal varie à une vitesse supérieure à un seuil de variation de vitesse haut prédéterminé.

Par ailleurs, préalablement à l'affichage de la limite de pas collectif, le procédé peut comporter une étape de filtrage, la limite de pas collectif étant déterminée à un instant de calcul courant en appliquant le filtre suivant :

$$\theta^n{}_{limdef} = (1 - f) * \theta^{n-1}_{limitdef} + f * \theta^n_{limit}$$

où « $\theta^n{}_{limdef}$ » représente la limite de pas collectif à l'issue de l'étape de filtrage, « $\theta^{n-1}_{limitdef}$ » représente la limite de pas collectif filtrée à l'instant de calcul précédent qui précède l'instant de calcul courant, « $\theta^n_{limit}$ » représente la limite de pas collectif déterminée avant l'étape de filtrage, « $f$ » représente une constante de filtrage, « = » représente le signe de l'égalité, « + » représente le signe de l'addition, « - » représente le signe de la soustraction, « * » représente le signe de la multiplication.

La constante de filtrage « f » a pour objectif de supprimer le bruit provenant des paramètres de calcul pour garantir un affichage stable de la limite de pas collectif. La constante de filtrage peut être une constante en tant que telle, ou peut varier en fonction de la phase de vol.

Par ailleurs, la constante de temps de ce filtre du premier ordre passe-bas est fixée à partir d'une analyse des paramètres d'entrée et peut être fixée dans la plage allant de 0,5 secondes à deux secondes.

En particulier, l'étape de gel peut être réalisée en conférant à la constante de filtrage f une valeur nulle (soit une constante de temps de filtrage infinie).

Ce filtre est alors utilisé pour gérer aussi les phases dynamiques où les limitations sont gelées. Par contre, durant les autres phases de vol ou au contraire il est nécessaire de mettre à jour rapidement les limitations, la constante de filtrage f est fixée à une valeur prédéterminée.

Par ailleurs, lors du passage d'une phase de vol agressive prédéterminée de l'aéronef à une phase de vol dite stabilisée, ledit filtre est appliqué, pendant une durée prédéterminée, avec une constante de filtrage égale à une constante de filtrage prédéterminée à appliquer durant la phase de vol stabilisée divisée par quatre.

Lors d'un passage d'une phase de vol agressive à une phase de vol stabilisé, une telle constante de temps variable tend à éviter tout saut de limite.

Par ailleurs, la valeur de la constante de filtrage peut être fonction d'une variable dite « variable d'un organe de commande » nommée Fpal, la variable d'un organe de commande variant en fonction d'une vitesse de déplacement d'un organe de commande commandant le pas de pales d'un rotor auxiliaire.

Chaque limite de pas collectif peut être filtrée lors d'une phase de vol statique, et éventuellement figée lors de certaines phases de vols dynamiques.

Lors d'une variation rapide de la position de l'organe de commande, une mise à jour rapide peut être intéressante.

Le filtre du premier ordre suivant peut être appliqué sur la position de l'organe de commande afin de calculer sa variation ;

```
DYaw=    g*prevDYaw    +    (1    —    g)*(currentYawpos-
prevYawposition
```

où « DYaw » représente la variation de la position de l'organe de commande à l'instant de calcul courant exprimée en pourcents par seconde, « g » représente une constante du filtre, « prevDYaw » représente la variation de la position de l'organe de commande à l'instant de calcul précédent, « currentYawpos » représente la position de l'organe de commande à l'instant de calcul courant, « prevYawposition » représente la position courante de l'organe de commande à l'instant de calcul précédent.

Pour obtenir une mise à jour du filtrage, un algorithme calculant la variation de la position de l'organe de commande est utilisé. La variation de la position de l'organe de commande permet d'obtenir une mise à jour de la constante de filtrage en temps réel et donc une mise à jour des limites de pas collectif plus rapide si besoin. Plus la variation de la position de l'organe de commande est importante, plus grande sera la variation de puissance. Les limites de pas collectif sont mises à jour en filtrant le moins possible l'affichage de ces limites de pas collectif au travers d'un coefficient de filtrage adapté.

Ainsi, la variable d'un organe de commande est calculée à partir de la variation de la position de l'organe de commande selon une loi prédéterminée. Par exemple, une telle loi est fonction d'un seuil de filtrage maximal autorisé, et des variations maximale et minimale de la position de l'organe de commande.

Selon une variante, la variable d'un organe de commande Fpal peut être égale à une valeur calculée à l'aide de la relation suivante :

$$[\text{Min (yaw\_decel\_max ; (Max (DYaw ; yaw\_decel\_min)))}] * \text{Yaw\_A + Yaw\_B},$$

avec

$$\text{Yaw\_A = (yaw\_filt\_coef\_max - 1) / (yaw\_decel\_max - yaw\_decel\_min)},$$

$$\text{Yaw\_B = 1 - (Yaw\_A * yaw\_decel\_min)}$$

où « Min » représente le minimum entre deux valeurs, « Max » représente le maximum entre deux valeurs, « DYaw » représente la variation de la position de l'organe de commande à l'instant de calcul courant, « yaw\_decel\_min » représente une constante par exemple égale à 4.0, « yaw\_filt\_coef\_max » représente une constante par exemple égale à 10.0, « yaw\_decel\_max » représente une constante par exemple égale à 8.0, / représente le signe de la division ; * représente le signe de la multiplication.

Ce filtrage peut être prioritaire sur l'étape de gel.

Par ailleurs, la valeur de la constante de filtrage est fonction également d'une valeur d'une variable dite « variable d'avancement » nommée Fvit, la variable d'avancement variant en fonction d'une vitesse d'avancement de l'aéronef.

Le filtre du premier ordre suivant peut être appliqué sur la vitesse d'avancement afin de calculer sa variation :;

$$\text{Delta\_Ias = h * prevDelta\_Ias + (1 − h) * (current\_IAS - prev\_IAS)}$$

où « Delta_Ias » représente la variation de la vitesse d'avancement à l'instant de calcul courant exprimée en noeuds par seconde, « h » représente une constante du filtre, « prevDelta_Ias » représente la variation de la vitesse d'avancement à l'instant de calcul précédent, « current_IAS » représente la vitesse d'avancement à l'instant de calcul courant, « prev_IAS » représente la vitesse d'avancement à l'instant de calcul précédent.

Pour obtenir une mise à jour du filtrage effectué, un algorithme calculant la variation de la vitesse d'avancement de l'aéronef est utilisé.

La variation de la vitesse de l'aéronef permet d'obtenir une mise à jour de la constante de filtrage en temps réel et donc une mise à jour de l'indicateur plus rapide si besoin.

Ainsi, la constante de filtrage est calculée à partir d'une loi prédéterminée. Par exemple, une telle loi est fonction d'un seuil de filtrage maximal autorisé, et des variations maximale et minimale d'avancement.

Selon une variante, la variable d'avancement Fvit est égale à 1 si la vitesse d'avancement est inférieure à un seuil (40 kts par exemple). Dans la négative, la variable d'avancement Fvit peut être égale à une valeur calculée à l'aide de la relation suivante :

Si Delta_las est positif:

$$[Max (ias\_decel\_max ; (Min (Delta\_las ; ias\_decel\_min)))] *$$

$$ias\_A + ias\_B,$$

Si Delta_las est négatif:

$$[Min (-ias\_decel\_max ; (Max (Delta\_las ; -ias\_decel\_min)))] *$$

$$-ias\_A + ias\_B,$$

avec

$$ias\_A = (ias\_filt\_coef\_max - 1) / (ias\_decel\_max -$$

$$ias\_decel\_min),$$

$$ias\_B = 1 - (ias\_A * ias\_decel\_min)$$

où « Min » représente le minimum entre deux valeurs, « Max » représente le maximum entre deux valeurs, « Delta_las » représente la variation de la vitesse d'avancement à l'instant de calcul courant, « ias_decel_min » représente une constante par exemple égale à -0.5, « ias_filt_coef_max » représente une constante par exemple égale à 2.5, « ias_decel_max » représente une constante par exemple égale à -1, « ias_decel_min » représente une constante par exemple égale à -0.5 ; / représente le signe de la division ; * représente le signe de la multiplication.

Selon une variante, la valeur de la constante de filtrage est égale au produit d'une constante prédéterminée CTE et du maximum entre la variable d'avancement (Fvit) et la variable d'un organe de commande (Fpal). La constante prédéterminée CTE est par exemple égale 0.02.

La constante de filtrage est ainsi déduite des conditions suivantes :

$$f = CTE * Max (Fpal ; Fvit)$$

où « f » représente la valeur de la constante de filtrage, « Max (Fpal ; Fvit) » représente le maximum entre la valeur de la variable d'un organe de commande Fpal et la valeur de la variable d'avancement Fvit.

Outre un procédé, l'invention vise un dispositif d'aide au pilotage comprenant un afficheur affichant une limite de pas collectif.

Ce dispositif d'aide au pilotage comporte une unité de traitement configurée pour appliquer ce procédé.

Ce dispositif d'aide au pilotage peut comporter au moins un des organes suivants :

- un système de régulation contrôlant chaque moteur, tel qu'un FADEC par exemple,

- un système de mesure mesurant un paramètre relatif à un pas collectif des pales du rotor principal, par exemple un système mesurant la position d'un organe mécanique tel qu'un levier de commande de pas collectif ou une servocommande ou encore une bielle,

- un système de mesure mesurant un paramètre relatif à une vitesse de rotation courante du rotor principal, par exemple un système mesurant la vitesse de rotation d'un mât rotor ou d'un organe tournant engendrant la rotation du rotor,

- un système de mesure mesurant une valeur relative à chaque paramètre de surveillance, tel qu'un FADEC par exemple,

- un système de mesure mesurant une valeur relative à la pression de l'air ambiant présent à l'extérieur de l'aéronef, tel qu'un capteur de pression ou un système anémobarométrique par exemple,

- un système de mesure mesurant une valeur relative à la température de l'air ambiant présent à l'extérieur de l'aéronef, tel qu'un thermomètre ou une sonde de température par exemple,

- un système de mesure mesurant une valeur relative à une vitesse d'avancement de l'aéronef, tel qu'un système anémobarométrique ou un système de positionnement par satellites par exemple

- un système de mesure mesurant une valeur relative à une position d'un organe de commande commandant le pas des pales d'un rotor auxiliaire de l'aéronef, tel qu'un capteur de position usuel.

Enfin, l'invention vise un aéronef muni d'une installation motrice comportant au moins un moteur et d'un rotor principal participant au moins partiellement à la sustentation et/ou à la propulsion de l'aéronef, cet aéronef comportant un tel dispositif d'aide au pilotage.

L'invention et ses avantages apparaîtront avec plus de détails dans le cadre de la description qui suit avec des exemples donnés à titre illustratif en référence aux figures annexées qui représentent :

- la figure 1, un schéma illustrant un aéronef selon l'invention, et

- la figure 2, un logigramme illustrant le procédé selon l'invention.

Les éléments présents dans plusieurs figures distinctes sont affectés d'une seule et même référence.

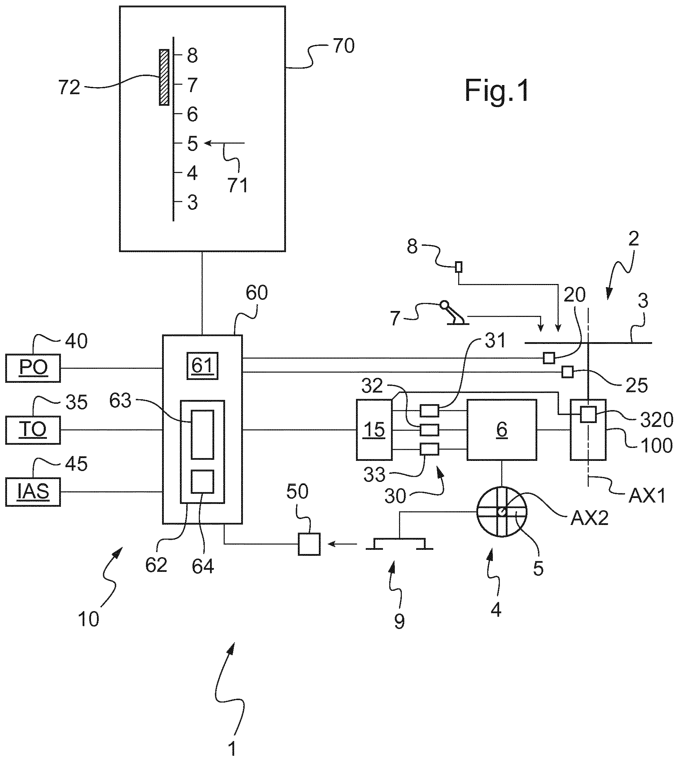

La figure 1 présente un aéronef 1 selon l'invention.

Cet aéronef comporte au moins un rotor principal 2 pourvu d'une pluralité de pales 3. Le rotor principal participe au moins à la sustentation voire à la propulsion de l'aéronef 1.

De plus, l'aéronef 1 peut comporter un rotor auxiliaire 4 muni de pales 5. Le rotor auxiliaire peut au moins participer au contrôle du mouvement en lacet de l'aéronef 1.

Dès lors, le rotor principal 2 et le rotor auxiliaire 4 sont libres d'effectuer des rotations par rapport à la cellule de l'aéronef 1 respectivement autour de deux axes de rotation non parallèles. Le rotor principal 2 effectue par exemple une rotation autour d'un axe en élévation AX1, le rotor auxiliaire 4 effectuant une rotation autour d'un axe transversal AX2.

Pour engendrer la rotation du rotor principal 2 et la rotation du rotor auxiliaire 4, l'aéronef 1 comporte une installation motrice comprenant au moins un moteur 6. Le moteur 6 peut être relié mécaniquement au rotor principal 2 par une boîte de transmission principale 100 de puissance. En outre, le moteur 6 peut être relié mécaniquement au rotor auxiliaire 2 par la boîte de transmission principale 100 et /ou une boite de transmission auxiliaire de puissance non représentée.

Le moteur 6 peut être par exemple un moteur thermique, ou un moteur électrique.

Chaque moteur peut être régulé par un moyen de régulation et de contrôle 15 parfois connu sous l'acronyme « FADEC ». Le moyen de régulation et de contrôle 15 peut comporter un doseur de carburant dans le cadre d'un moteur thermique et une unité commandant le doseur de carburant en fonction de paramètres de surveillance du moteur voire de la boîte de transmission de puissance et de consignes.

Sur un turbomoteur, ces paramètres de surveillance peuvent inclure la vitesse de rotation Ng du générateur de gaz du turbomoteur mesurée par un capteur de vitesse 31, le couple moteur Q mesuré par un couplemètre 32 et une température mesurée par un capteur de température 33. Par exemple la température T4 ou T45 des gaz à l'entrée d'une turbine libre basse pression du turbomoteur est mesurée.

Ces paramètres de surveillance peuvent aussi inclure un couple C exercé au sein de la boite de transmission principale, notamment sur un arbre de cette boite de transmission principale tel qu'un mât rotor .L'aéronef peut alors comporter un moyen de surveillance du couple C de la boite de transmission principale 100 mesuré par un couplemètre 320.

On se référera à la littérature pour obtenir des informations complémentaires sur les paramètres de surveillance d'une installation motrice et leurs systèmes de mesure 30.

Par ailleurs, l'aéronef 1 comporte des moyens pour commander le pas des pales du rotor principal et des pales du rotor arrière. Ainsi, le pas collectif des pales 3 du rotor principal peut être contrôlé par un levier de pas collectif 7, le pas cyclique des pales 3 du rotor principal pouvant être contrôlé par un manche cyclique 8. Le pas collectif des pales 5 du rotor auxiliaire 4 peut être contrôlé par un organe de commande 9, tel qu'un palonnier par exemple.

En outre, l'aéronef 1 comporte un dispositif d'aide au pilotage 10 selon l'invention.

Ce dispositif d'aide au pilotage 10 est muni d'une unité de traitement 60 qui est configurée pour mettre en oeuvre le procédé selon l'invention

L'unité de traitement 60 peut comprendre par exemple un processeur, un circuit intégré, un système programmable, un circuit logique, ces exemples ne limitant pas la portée donnée à l'expression « unité de traitement ».

Selon l'exemple de la figure 1, l'unité de traitement 60 comporte une unité de calcul 61. Par exemple, cette unité de calcul 61 est munie d'au moins un processeur.

En outre, l'unité de traitement 60 possède une unité de stockage 62. Par exemple, l'unité de stockage 62 est munie d'une ou plusieurs mémoires éventuellement amovibles. Une telle mémoire peut prendre la forme d'un disque dur, d'une carte de mémoire amovible... L'unité de stockage 62 peut notamment posséder une mémoire non volatile 63 stockant des instructions exécutables par l'unité de calcul pour mettre en oeuvre des étapes du procédé de l'invention, voire une mémoire volatile 64 mémorisant des données mesurées, utiles à l'exécution dudit procédé.

L'unité de traitement peut alors être reliée par une liaison filaire ou sans fil à divers systèmes de mesure et par exemple à : un système de mesure 20 mesurant un paramètre relatif au pas collectif des pales 3 du rotor principal 2 tel que par exemple la position d'un organe d'une chaîne de commande du pas collectif, un système de mesure 25 mesurant un paramètre relatif à une vitesse de rotation courante du rotor principal 2, un système de mesure 30 mesurant une valeur relative à chaque paramètre de surveillance, un système de mesure 35 mesurant une valeur relative à la température T0 de l'air ambiant présent à l'extérieur de l'aéronef 1, un système de mesure 40 mesurant une valeur relative à la pression P0 de l'air ambiant présent à l'extérieur de l'aéronef 1, un système de mesure 45 mesurant une valeur relative à une vitesse d'avancement IAS de l'aéronef 1, un système de mesure 50 mesurant une valeur relative à une position de l'organe de commande 9 commandant le pas des pales du rotor auxiliaire 4.

Eventuellement, l'unité de traitement 60 peut communiquer avec un système de régulation 15 contrôlant un moteur 6, pour obtenir les valeurs courantes des paramètres de surveillance voire une marge de chaque paramètre de surveillance par rapport à au moins une limite ou encore une marge de puissance limitante.

Dès lors, l'unité de traitement peut mémoriser dans son unité de stockage les données provenant des systèmes de mesure. Cette unité de traitement exécute alors les étapes du procédé selon l'invention pour obtenir au moins une limite de pas collectif du rotor principal, voire une limite de pas collectif du rotor principal pour au moins deux régimes de fonctionnement du moteur 6.

En outre, l'unité de traitement est reliée par une liaison filaire ou sans fil à un afficheur 70 pour afficher chaque limite de pas collectif sur cet afficheur.

Dès lors, l'afficheur 70 peut posséder un écran présentant une échelle en équivalent de pas collectif qui défile devant un index 71. L'index 71 pointe alors l'échelle pour signaler à un pilote une valeur du pas collectif courant des pales du rotor principal. De plus, au moins un symbole 72 représentant une limite de pas collectif est affiché.

La symbologie du document FR 2756256 peut par exemple être utilisée.

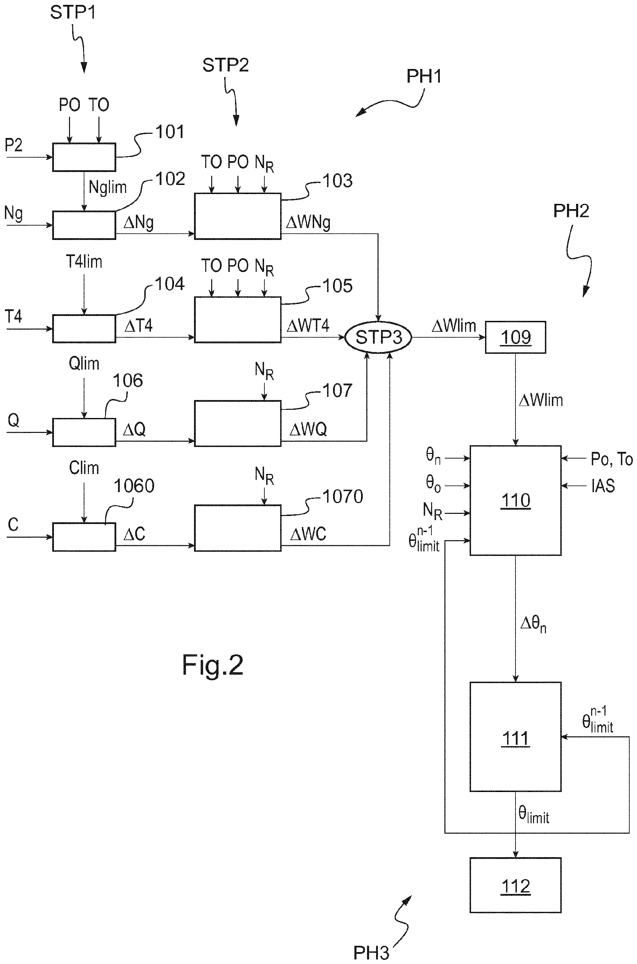

La figure 2 présente un logigramme explicitant le procédé mis en oeuvre par le dispositif d'aide au pilotage pour déterminer une limite de pas collectif.

Durant une première phase PH1, le dispositif d'aide au pilotage détermine une marge de puissance limitante $\Delta Wlim$ de l'installation motrice 6.

Cette marge de puissance limitante $\Delta Wlim$ peut être déterminée par le moyen de régulation et de contrôle 15 des moteur 6, puis transmise à l'unité de traitement 60.

Selon une autre variante et durant une première étape STP1 de la première phase PH1, l'unité de traitement détermine une marge dite « marge individuelle $\Delta Ng, \Delta t4, \Delta Q, \Delta C$ » pour respectivement chaque paramètre de surveillance Ng, T4, Q, C.

Par exemple, l'unité de traitement applique un modèle mathématique 101 du moteur pour déterminer une limite de la vitesse de rotation du générateur de gaz Nglim, par exemple en fonction d'un prélèvement de gaz P2 effectué sur le moteur, d'une pression extérieure P0 et d'une température extérieure T0. L'unité de traitement effectue alors une différence 102 de cette limite de la vitesse de rotation du générateur de gaz Nglim et de la vitesse de rotation courante du générateur de gaz Ng pour obtenir une première marge individuelle $\Delta Ng$ de la vitesse de rotation du générateur de gaz.

Le modèle mathématique du moteur peut en outre fournir une limite de température T4lim du moteur et une limite de couple Qlim. L'unité de traitement effectue alors une différence 104 de cette limite de température T4lim et de la température courante T4 pour obtenir une deuxième marge individuelle $\Delta t4$ de température. De même, l'unité de traitement effectue une différence 106 de cette limite de couple Qlim et du couple courant Q du moteur pour obtenir une troisième marge individuelle $\Delta Q$ de couple. Eventuellement, l'unité de traitement effectue une différence 1060 de la limite de couple Clim et du couple courant C de la boîte de transmission de puissance pour obtenir une quatrième marge individuelle $\Delta C$ de couple.

Durant une deuxième étape STP2 de la première phase PH1, l'unité de traitement transforme chaque marge individuelle $\Delta Ng, \Delta t4, \Delta Q, \Delta C$ en une marge de puissance respective du moteur dite « marge de puissance individuelle $\Delta WNg, \Delta Wt4, \Delta WQ, \Delta WC$ » en appliquant des modèles mathématiques usuels.

Par exemple et durant une première opération 103, l'unité de traitement transforme la première marge individuelle ΔNg en une première marge de puissance individuelle ΔWNg en fonction notamment de la pression extérieure P0 ainsi que de la température extérieure T0 et de la vitesse de rotation Nr du rotor principal.

Durant une deuxième opération 105, l'unité de traitement peut transformer la deuxième marge individuelle Δt4 en une deuxième marge de puissance individuelle ΔWt4 en fonction notamment de la pression extérieure P0 ainsi que de la température extérieure T0 et de la vitesse de rotation Nr du rotor principal.

Durant une troisième opération 107, l'unité de traitement peut transformer la troisième marge individuelle ΔQ en une troisième marge de puissance individuelle ΔWQ en fonction notamment de la vitesse de rotation Nr du rotor principal.

Eventuellement, durant une quatrième opération 1070, l'unité de traitement peut transformer la quatrième marge individuelle ΔC en une quatrième marge de puissance individuelle ΔWC en fonction notamment de la vitesse de rotation Nr du rotor principal.

Par suite et durant une troisième étape STP3 de la première phase PH1, l'unité de traitement détermine la marge de puissance limitante ΔWlim. La marge de puissance limitante ΔWlim est égale à la marge de puissance individuelle la plus faible. Selon l'exemple de la figure 2. La marge de puissance limitante ΔWlim est égale à la valeur minimale entre la première marge de puissance individuelle ΔWNg, la deuxième marge de puissance individuelle ΔWt4 et la troisième marge de puissance individuelle ΔWQ, voire la quatrième marge de puissance individuelle ΔWC.

Durant une deuxième phase PH2, l'unité de traitement 60 transforme la marge de puissance limitante ΔWlim en une marge de pas collectif Δθn représentant la marge entre un pas collectif courant $\theta^n$ des pales du rotor principal et une limite de pas collectif $\theta_{limit}$.

Durant une première étape 109 optionnelle de la deuxième phase PH2, l'unité de traitement 60 réduit la marge de puissance limitante ΔWlim selon un pourcentage prédéterminé si la vitesse de rotation Nr du rotor principal 2 diminue à une vitesse prédéterminée pendant un temps prédéterminé.

La réduction opérée peut être temporaire. Par exemple, le pourcentage de réduction appliqué à la marge de puissance limitante ΔWlim décroit d'un maximum à une valeur nulle sur une période prédéterminée. Par exemple, ce pourcentage décroit de 25% à zéro en deux secondes.

Durant une deuxième étape 110 de la deuxième phase PH2, l'unité de traitement détermine à chaque instant de calcul courant n une marge de pas collectif Δθn des pales du rotor principal.

A cet effet, l'unité de traitement applique un algorithme minorant la marge de pas collectif Δθn par rapport à la marge de pas collectif réelle proportionnelle à la marge de puissance limitante ΔWlim lorsque la marge de puissance est non nulle pour anticiper un dépassement de ladite consigne induit par ledit moyen de régulation. La marge de pas collectif Δθn est nulle lorsque la marge puissance limitante ΔWlim est nulle.

L'unité de traitement applique par exemple un algorithme récursif à l'aide d'une relation principale fournissant à chaque instant de calcul courant la marge de pas collectif Δθn. En particulier, la relation principale exprime la marge de pas collectif Δθn en fonction du quotient de la marge de puissance limitante ΔWlim et d'un dénominateur, ce dénominateur étant égal au produit d'un premier terme A1 et d'un deuxième terme A2. Le premier terme A1 est en outre fonction du pas collectif courant $\theta^n$ des pales du rotor principal et de la limite de pas collectif $\theta_{limit}^{n-1}$ des pales du rotor principal à un instant de calcul précédent n-1 qui précède l'instant de calcul courant n. Le deuxième terme A2 est fonction d'au moins un coefficient B prédéterminé minorant la marge de puissance de l'installation motrice

La relation principale prend alors la forme suivante :

$$\Delta \theta n = \frac{\Delta Wlim}{A1(\theta_{limit}^{n-1}, \theta^n) * A2(B)}$$

A la première itération réalisée au démarrage de l'aéronef, la limite de pas collectif $\theta_{limit}^{n-1}$ est initialisée à une valeur d'initialisation prédéterminée.

Plus précisément, le premier terme peut prendre la forme suivante :

$$A1 = \theta_{limit}^{n-1} + \theta^n - 2 * \theta_0$$

où « A1 » représente ledit premier terme, « $\theta_{limit}^{n-1}$ » représente la limite de pas collectif à l'instant de calcul précédent qui précède l'instant de calcul courant, « $\theta^n$ » représente le pas collectif courant, « $\theta_0$ » représente une constante relative à un pas collectif de référence, « = » représente le signe de l'égalité, « + » représente le signe de l'addition, « - » représente le signe de la soustraction, « * » représente le signe de la multiplication.

En outre, le deuxième terme peut prendre la forme suivante :

$$A2 = B * \sigma * Nr^3$$

où « A2 » représente ledit deuxième terme, « B » représente ledit coefficient, « $\sigma$ » représente la densité de l'air, « Nr » représente un paramètre relatif à la vitesse de rotation du rotor principal, « * » représente le signe de la multiplication.

Par suite, la relation principale appliquée par l'unité de traitement peut prendre la forme suivante :

$$\Delta \theta n = \frac{\Delta W lim}{B * (\theta_{limit}^{n-1} + \theta^n - 2 * \theta_0) * \sigma * Nr^3}$$

Le coefficient B peut être déterminé par essai par le constructeur pour minorer en permanence la marge de pas collectif calculée par rapport à la marge de pas collectif réelle.

Par suite, le coefficient B peut être une variable qui varie en fonction de la vitesse d'avancement IAS de l'aéronef 1.

Durant une première étape 111 de la troisième phase PH3, l'unité de traitement 60 détermine à chaque instant de calcul la limite de pas collectif $\theta_{limit}$ des pales du rotor principal. Cette limite de pas collectif $\theta_{limit}$ est égale à la somme de la marge de pas collectif des pales du rotor principal et du pas collectif courant des pales du rotor principal.

Durant une deuxième étape 112, l'unité de traitement requiert l'affichage du pas collectif courant et de la limite de pas collectif $\theta_{limit}$.

Eventuellement, durant la première étape 111 de la troisième phase PH3, l'unité de traitement comporte une étape de filtrage. L'unité de traitement détermine alors la limite de pas collectif des pales du rotor principal à afficher à un instant de calcul courant en appliquant le filtre suivant :

$$\theta^n_{limdef} = (1 - f) * \theta_{limitdef}^{n-1} + f * \theta_{limit}^n$$

où « $\theta^n_{limdef}$ » représente la limite de pas collectif des pales du rotor principal à l'issue de l'étape de filtrage, « $\theta_{limitdef}^{n-1}$ » représente la limite de pas collectif des pales du rotor principal à l'instant de calcul précédent qui précède l'instant de calcul courant, « $\theta_{limit}^n$ » représente la limite de pas collectif des pales du rotor principal avant l'étape de filtrage, « f » représente une constante de filtrage, « = » représente le signe de l'égalité, « + » représente le signe de l'addition, « - » représente le signe de la soustraction, « * » représente le signe de la multiplication.

Dès lors, la valeur de la limite de pas collectif des pales du rotor principal à l'issue de l'étape de filtrage est réutilisée durant la deuxième étape 110 de la deuxième phase PH2 et la première étape 111 de la troisième phase PH3 réalisée à l'instant de calcul de suivant.

Par ailleurs la constante de filtrage f peut être déterminée par exemple par essais, et peut varier en fonction de la phase de vol.

Eventuellement, l'unité de traitement détermine la valeur de la constante de filtrage en fonction d'une valeur d'une variable dite « variable d'un organe de commande Fpal ». Cette variable d'un organe de commande Fpal est fonction d'une vitesse de déplacement de l'organe de commande 9 qui commande le pas des pales 5 du rotor auxiliaire 4. Par exemple, une relation prédéterminée ou un tableau de valeurs donne la valeur de la variable d'un organe de commande Fpal en fonction de la vitesse de déplacement de l'organe de commande 9.

De manière alternative ou complémentaire, l'unité de traitement 60 détermine la valeur de la constante de filtrage f en fonction d'une valeur d'une variable dite « variable d'avancement Fvit ». Cette variable d'avancement Fvit est en outre fonction d'une vitesse d'avancement IAS de l'aéronef 1. Par exemple, une relation prédéterminée ou un tableau de valeurs donne la valeur de la variable d'avancement Fvit en fonction de la vitesse d'avancement IAS.

Le cas échéant, la valeur de la constante de filtrage est égale au produit d'une constante prédéterminée et du maximum entre la variable d'avancement Fvit et la variable d'un organe de commande Fpal.

Par ailleurs, l'unité de traitement 60 peut geler la limite de pas collectif en la maintenant égale à la valeur de cette limite de pas collectif au pas de calcul précédent. En particulier, l'unité de traitement peut geler la limite de pas collectif lors d'une phase de vol agressive prédéterminée de l'aéronef 1.

Une phase de vol peut être considérée comme étant une phase de vol agressive :

- si le pas collectif des pales 3 du rotor principal 2 varie à une vitesse supérieure à un seuil de variation de vitesse haut K1 prédéterminé, ou

- si le pas collectif des pales 3 du rotor principal 2 varie à une vitesse comprise entre un seuil de variation de vitesse bas K0 prédéterminé et ledit seuil de variation de vitesse haut K1 pendant un seuil de durée, ou

- si la variation de la vitesse de rotation dudit rotor principal est supérieure à un seuil bas K2 et si l'organe de commande 9 commandant le pas de pales 5 du rotor auxiliaire 4 n'est pas manoeuvré, ou

- si la variation de la vitesse de rotation dudit rotor principal est supérieure à un seuil haut K3 et si l'organe de commande 9 est manoeuvré.

L'unité de traitement peut néanmoins inhiber l'étape de gel si la position de l'organe de commande 9 commandant le pas de pales 5 d'un rotor auxiliaire 4 varie à une vitesse de déplacement supérieure à un seuil de vitesse de déplacement.

Par contre, l'étape de gel n'est éventuellement pas inhibée si la position de l'organe de commande 9 commandant le pas de pales 5 d'un rotor auxiliaire 4 varie à une vitesse de déplacement supérieure à un seuil de déplacement et si le pas collectif des pales 3 du rotor principal 2 varie à une vitesse supérieure à un seuil de variation de vitesse haut prédéterminé. Dans cette phase de vol très agressive, le gel de la limite ne peut pas être interdit.

L'étape de gel peut être réalisée en maintenant constante la marge de puissance limitante ou la marge de pas collectif par exemple.

Selon l'exemple de la figure 2, l'unité de traitement 60 peut attribuer à la constante de filtrage f une valeur nulle lors d'une phase de vol agressive.

La valeur de la constante de filtrage f peut alors varier lors d'une phase de vol agressive et/ ou en fonction de la valeur de la variable d'un organe de commande Fpal voire de la valeur de la variable d'avancement Fvit

En outre, lors du passage d'une phase de vol dite « phase de vol agressive » à une phase de vol stabilisée, la constante de filtrage peut être modifiée. Par exemple, cette constante de filtrage peut être modifiée pour être égale, pendant une durée déterminée de transition, à la constante de filtrage à appliquer en phase de vol stabilisée divisée par quatre.

L'expression « phase de vol stabilisé » désigne toutes les phases de vol qui ne sont pas considérées comme étant agressives.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

La figure 2 illustre notamment un logigramme illustrant le procédé selon l'invention.

Toutefois, ce procédé peut être mis en oeuvre en appliquant des logigrammes alternatifs. Par exemple, un tel logigramme alternatif pourrait comprendre deux branches distinctes, une branche comprenant les étapes à mettre en oeuvre lors d'une phase de vol stabilisé, et une autre branche comprenant les étapes à mettre en oeuvre lors d'une phase de vol dynamique. Par exemple, un test pour être réalisée à l'issue de la détermination de la marge de puissance limitante pour déterminer la branche à utiliser.

**Revendications**

1. Procédé d'aide au pilotage d'un aéronef (1) muni d'une installation motrice comportant au moins un moteur (6) et d'un rotor principal (2) participant au moins partiellement à la sustentation et/ou à la propulsion de l'aéronef (1), ledit aéronef étant un giravion, chaque moteur (6) étant régulé par un moyen de régulation en fonction d'une consigne, l'installation motrice étant surveillée en déterminant une valeur d'une pluralité de paramètres de surveillance (Ng, T4, Q, C) prédéterminés, ledit procédé comprenant les étapes suivantes pour au moins un régime de fonctionnement dudit au moins un moteur :

   - détermination d'une marge de puissance dite « marge de puissance limitante ($\Delta$Wlim) » de ladite installation motrice par rapport à une limite de puissance au dit régime de fonctionnement,
   - transformation de la marge de puissance limitante ($\Delta$Wlim) en une marge de pas collectif ($\Delta\theta$) pour ledit régime de fonctionnement, la marge de pas collectif ($\Delta\theta$) représentant une marge entre un pas collectif courant ($\theta^n$) de pales dudit rotor principal et une limite de pas collectif ($\theta_{limit}$) de ces pales,
   - détermination de ladite limite de pas collectif ($\theta_{limit}$) et affichage de ladite limite de pas collectif ($\theta_{limit}$),

**caractérisé en ce que** ladite transformation de la marge de puissance limitante (ΔWlim) en une marge de pas collectif (Δθ) est réalisée en appliquant un algorithme, ledit algorithme minorant ladite marge de pas collectif (Δθ) par rapport à une marge de pas collectif réelle proportionnelle à la marge de puissance limitante (ΔWlim) lorsque la marge de puissance est non nulle pour anticiper un dépassement de ladite consigne induit par ledit moyen de régulation, ladite marge de pas collectif (Δθ) étant nulle lorsque la marge puissance limitante (ΔWlim) est nulle.

2. Procédé d'aide au pilotage selon la revendication 1,
**caractérisé en ce que** ledit algorithme est un algorithme récursif utilisant une relation principale fournissant à chaque instant de calcul courant ladite marge de pas collectif (Δθ) en fonction d'un quotient de ladite marge de puissance limitante (ΔWlim) et d'un dénominateur, ledit dénominateur étant égal au produit d'un premier terme (A1) et d'un deuxième terme (A2), le premier terme (A1) étant fonction du pas collectif courant ($\theta^n$) desdites pales audit instant de calcul courant (n) et d'une la limite de pas collectif ($\theta_{limit}^{n-1}$) à un instant de calcul précédent (n-1) qui précède ledit instant de calcul courant (n), ledit deuxième terme (A2) étant fonction d'au moins un coefficient (B) prédéterminé minorant ladite marge de puissance de ladite installation motrice.

3. Procédé d'aide au pilotage selon la revendication 2,
**caractérisé en ce que** pour déterminer la marge de puissance limitante (ΔWlim), ledit procédé comporte les étapes suivantes :

- détermination d'une marge dite « marge individuelle (Δ*Ng*,Δ*t*4,Δ*Q*,Δ*C*) » pour chaque paramètre de surveillance (Ng, T4, Q,C),
- transformation de chaque marge individuelle en une marge de puissance dite « marge de puissance individuelle (Δ*WNg*,Δ*Wt*4,Δ*WQ*,Δ*WC*) », ladite marge de puissance limitante (ΔWlim) étant égale à la marge de puissance individuelle la plus faible.

4. Procédé d'aide au pilotage selon l'une quelconque des revendications 2 à 3,
**caractérisé en ce que** ledit premier terme est déterminé à l'aide de la relation suivante :

$$A1 = \theta_{limit}^{n-1} + \theta^n - 2 * \theta_0$$

où « A1 » représente ledit premier terme, « $\theta_{limit}^{n-1}$ » représente la limite de pas collectif à l'instant de calcul précédent qui précède l'instant de calcul courant, « $\theta^n$ » représente ledit pas collectif courant, « $\theta_0$ » représente une constante relative à un pas collectif de référence, « = » représente le signe de l'égalité, « + » représente le signe de l'addition, « - » représente le signe de la soustraction, « * » représente le signe de la multiplication.

5. Procédé d'aide au pilotage selon l'une quelconque des revendications 2 à 4,
**caractérisé en ce que** ledit deuxième terme est déterminé à l'aide de la relation suivante :

$$A2 = B * \sigma * Nr^3$$

où « A2 » représente ledit deuxième terme, « B » représente ledit coefficient, « $\sigma$ » représente la densité de l'air, « Nr » représente un paramètre relatif à la vitesse de rotation du rotor principal, « * » représente le signe de la multiplication.

6. Procédé d'aide au pilotage selon l'une quelconque des revendications 2 à 5,
**caractérisé en ce que** ledit coefficient (B) est une variable qui varie en fonction de la vitesse d'avancement (IAS) de l'aéronef (1).

7. Procédé selon l'une quelconque des revendications 2 à 6, **caractérisé en ce que** préalablement à la transformation de la marge de puissance limitante (ΔWlim) en une marge de pas collectif (Δθ), la marge de puissance limitante (ΔWlim) est réduite selon un pourcentage prédéterminé si une vitesse de rotation dudit rotor principal (2) diminue à une vitesse prédéterminée pendant un temps prédéterminé.

8. Procédé selon la revendication 7,

**caractérisé en ce que** ledit pourcentage décroit d'un maximum à une valeur nulle sur une période prédéterminée.

9. Procédé selon l'une quelconque des revendications 1 à 8,
**caractérisé en ce que** lors d'une phase de vol agressive prédéterminée de l'aéronef (1), le procédé comporte une étape de gel durant laquelle la limite de pas collectif est maintenue égale à la valeur de cette limite de pas collectif atteinte avant ladite phase de vol agressive.

10. Procédé selon la revendication 9,
**caractérisé en ce qu'**une phase de vol agressive est détectée :

- si le pas collectif des pales (3) du rotor principal (2) varie à une vitesse supérieure à un seuil de variation de vitesse haut (K1) prédéterminé, ou
- si le pas collectif des pales (3) du rotor principal (2) varie à une vitesse comprise entre un seuil de variation de vitesse bas (K0) prédéterminé et ledit seuil de variation de vitesse haut (K1) pendant un seuil de durée, ou
- si une variation d'une vitesse de rotation dudit rotor principal est supérieure à un seuil bas et si un organe de commande (9) commandant le pas de pales (5) d'un rotor auxiliaire (4) n'est pas manoeuvré, ou
- si la variation de la vitesse de rotation dudit rotor principal est supérieure à un seuil haut (K3) et si ledit organe de commande (9) est manoeuvré.

11. Procédé selon la revendication 9,
**caractérisé en ce que** ladite étape de gel est inhibée si une position d'un organe de commande (9) commandant le pas de pales (5) d'un rotor auxiliaire (4) varie à une vitesse de déplacement supérieure à un seuil de vitesse de déplacement.

12. Procédé selon la revendication 11,
**caractérisé en ce que** ladite étape de gel n'est pas inhibée si une position d'un organe de commande (9) commandant le pas de pales (5) d'un rotor auxiliaire (4) varie à une vitesse de déplacement supérieure à un seuil de déplacement et si le pas collectif des pales (3) du rotor principal (2) varie à une vitesse supérieure à un seuil de variation de vitesse haut prédéterminé

13. Procédé selon l'une quelconque des revendications 1 à 12,
**caractérisé en ce que** préalablement à l'affichage de la limite de pas collectif, ledit procédé comporte une étape de filtrage, la limite de pas collectif étant déterminée à un instant de calcul courant en appliquant le filtre suivant :

$$\theta^n{}_{limdef} = (1 - f) * \theta^{n-1}_{limitdef} + f * \theta^n_{limit}$$

où « $\theta^n{}_{limdef}$ » représente la limite de pas collectif à l'issue de l'étape de filtrage, « $\theta^{n-1}_{limitdef}$ » représente la limite de pas collectif filtrée à l'instant de calcul précédent qui précède l'instant de calcul courant, « $\theta^n_{limit}$ » représente la limite de pas collectif déterminée avant l'étape de filtrage, « f » représente une constante de filtrage, « = » représente le signe de l'égalité, « + » représente le signe de l'addition, « - » représente le signe de la soustraction, « * » représente le signe de la multiplication.

14. Procédé selon la revendication 9 et la revendication 13,
**caractérisé en ce que** l'étape de gel est réalisée en conférant à ladite constante de filtrage une valeur nulle.

15. Procédé selon la revendication 13,
**Caractérisé en ce que** lors du passage d'une phase de vol dite agressive à une phase de vol stabilisée prédéterminée de l'aéronef (1), ledit filtre est appliqué, pendant une durée prédéterminée, avec une constante de filtrage égale à une constante de filtrage prédéterminée à appliquer durant la phase de vol stabilisée divisée par quatre.

16. Procédé selon l'une quelconque des revendications 13 à 15,
**caractérisé en ce que** la valeur de la constante de filtrage est fonction d'une valeur d'une variable dite « variable d'un organe de commande (Fpal) », la variable d'un organe de commande (Fpal) variant en fonction d'une vitesse de déplacement d'un organe de commande (9) commandant le pas de pales (5) d'un rotor auxiliaire (4).

**17.** Procédé selon l'une quelconque des revendications 13 à 16,
**caractérisé en ce que** la valeur de la constante de filtrage (f) est fonction d'une valeur d'une variable dite « variable d'avancement (Fvit) », la variable d'avancement (Fvit) variant en fonction d'une vitesse d'avancement (IAS) de l'aéronef (1).

**18.** Procédé selon la revendication 16 et la revendication 17,
**caractérisé en ce que** la valeur de la constante de filtrage est égale au produit d'une constante prédéterminée et du maximum entre la variable d'avancement (Fvit) et la variable d'un organe de commande (Fpal).

**19.** Dispositif d'aide au pilotage comprenant un afficheur (70) affichant une limite de pas collectif,
**caractérisé en ce que** ledit dispositif d'aide au pilotage (10) comporte une unité de traitement (60) configurée pour appliquer le procédé selon l'une quelconque des revendications 1 à 18.

**20.** Dispositif d'aide au pilotage selon la revendication 19,
**caractérisé en ce que** ledit dispositif d'aide au pilotage (10) comporte au moins un des organes suivants :

- un système de régulation (15) contrôlant chaque moteur (6),
- un système de mesure (20) mesurant un paramètre relatif à un pas collectif de pales (3) du rotor principal (2),
- un système de mesure (25) mesurant un paramètre relatif à une vitesse de rotation courante du rotor principal (2),
- un système de mesure (30) mesurant une valeur relative à chaque paramètre de surveillance,
- un système de mesure (40) mesurant une valeur relative à une pression (P0) de l'air ambiant présent à l'extérieur de l'aéronef (1),
- un système de mesure (35) mesurant une valeur relative à une température (T0) de l'air ambiant présent à l'extérieur de l'aéronef (1),
- un système de mesure (45) mesurant une valeur relative à une vitesse d'avancement (IAS) de l'aéronef (1),
- un système de mesure (50) mesurant une valeur relative à une position d'un organe de commande (9) commandant un pas de pales d'un rotor auxiliaire (4) de l'aéronef (1).

**21.** Aéronef (1) muni d'une installation motrice comportant au moins un moteur (6) et d'un rotor principal (2) participant au moins partiellement à la sustentation et/ou à la propulsion de l'aéronef (1),
**caractérisé en ce que** ledit aéronef (1) étant un giravion qui comporte un dispositif d'aide au pilotage (10) selon l'une quelconque des revendications 19 à 20.

**Patentansprüche**

**1.** Verfahren zur Unterstützung der Steuerung eines Luftfahrzeugs (1) mit einem Antriebsaggregat, welches mindestens einen Motor (6) und einen Hauptrotor (2) aufweist, der zumindest teilweise zu dem Auftrieb und/oder dem Vortrieb des Luftfahrzeugs (1) beiträgt, wobei das Luftfahrzeug ein Drehflügelflugzeug ist, wobei jeder Motor (6) von einem Regelungsmittel in Abhängigkeit von einem Sollwert geregelt wird, wobei das Antriebsaggregat überwacht wird durch Bestimmung eines Wertes einer Mehrzahl von vorbestimmten Überwachungsparametern (Ng, T4, Q, C), wobei das Verfahren folgende Schritte für mindestens eine Betriebsart des mindestens einen Motors aufweist:

- Bestimmung einer "begrenzende Leistungsbandbreite ($\Delta$Wlim)" genannten Leistungsbandbreite des Antriebsaggregats relativ zu einem Leistungsgrenzwert in dieser Betriebsart,
- Umwandlung der begrenzenden Leistungsbandbreite ($\Delta$Wlim) in eine Bandbreite der kollektiven Rotorblattverstellung ($\Delta\theta$) für diese Betriebsart, wobei die kollektive Rotorblattverstellung ($\Delta\theta$) eine Bandbreite darstellt zwischen einer aktuellen kollektiven Rotorblattverstellung ($\theta^n$) der Rotorblätter des Hauptrotors und einem Grenzwert der kollektiven Rotorblattverstellung ($\theta_{limit}$) dieser Rotorblätter,
- Bestimmung des Grenzwertes der kollektiven Rotorblattverstellung ($\theta_{limit}$) und Anzeige dieses Grenzwertes der kollektiven Rotorblattverstellung ($\theta_{limit}$),

**dadurch gekennzeichnet, dass** die Umwandlung der begrenzenden Leistungsbandbreite ($\Delta$Wlim) in eine Bandbreite der kollektiven Rotorblattverstellung ($\Delta\theta$) ausgeführt wird unter Anwendung eines Algorithmus, wobei der Algorithmus die Bandbreite der kollektiven Rotorblattverstellung ($\Delta\theta$) relativ zu einer Bandbreite der tatsächlichen kollektiven Rotorblattverstellung, die proportional zu der begrenzenden Leistungsbandbreite ($\Delta$Wlim) ist, verkleinert, wenn die Leistungsbandbreite nicht Null ist, um einer Überschreitung des Sollwertes vorzugreifen, der an dem Regelungsmittel vorgegeben ist, wobei die Bandbreite der kollektiven Rotorblattverstellung ($\Delta\theta$) Null ist, wenn die begrenzende Leistungsbandbreite ($\Delta$Wlim) gleich Null ist.

**2.** Verfahren zur Unterstützung der Steuerung nach Anspruch 1, **dadurch gekennzeichnet, dass** der Algorithmus ein rekursiver Algorithmus ist, der eine Hauptbeziehung verwendet, die zu jedem Zeitpunkt der aktuellen Berechnung die Bandbreite der kollektiven Rotorblattverstellung ($\Delta\theta$) in Abhängigkeit von einem Quotienten aus der begrenzenden Leistungsbandbreite ($\Delta$Wlim) und einem Nenner liefert, wobei der Nenner gleich dem Produkt aus einem ersten Term (A1) und einem zweiten Term (A2) ist, wobei der erste Term (A1) von der aktuellen kollektiven Rotorblattverstellung ($\theta^n$) der Rotorblätter zu dem Zeitpunkt der laufenden Berechnung (n) abhängig ist und von dem Grenzwert der kollektiven Rotorblattverstellung $\left(\theta_{limit}^{n-1}\right)$ zu einem vorhergehenden Berechnungszeitpunkt (n-1), der dem aktuellen Berechnungszeitpunkt (n) vorhergeht, wobei der zweite Term (A2) von mindestens einem vorbestimmten Koeffizienten (B) abhängt, der die Leistungsbandbreite des Antriebsaggregats verkleinert.

**3.** Verfahren zur Unterstützung der Steuerung nach Anspruch 2, **dadurch gekennzeichnet, dass** zum Bestimmen der begrenzenden Leistungsbandbreite ($\Delta$Wlim) das Verfahren die folgenden Schritte aufweist:

- Bestimmung einer "individuelle Bandbreite ($\Delta$Ng, $\Delta t4$, $\Delta$Q, $\Delta$C)" genannten Bandbreite für jeden Überwachungsparameter (Ng, T4, Q, C),
- Umwandlung einer jeden individuellen Bandbreite in eine "individuelle Leistungsbandbreite ($\Delta$WNg, $\Delta$Wt4, $\Delta$WQ, $\Delta$WC)" genante Leistungsbandbreite, wobei die begrenzende Leistungsbandbreite ($\Delta$Wlim) gleich der kleinsten individuellen Leistungsbandbreite ist.

**4.** Verfahren zur Unterstützung der Steuerung nach einem der Ansprüche 2 bis 3, **dadurch gekennzeichnet, dass** der erste Term mit Hilfe der folgenden Beziehung bestimmt wird:

$$A1 = \theta_{limit}^{n-1} + \theta^n - 2 * \theta_0$$

wobei "A1" den ersten Term bezeichnet, "$\theta_{limit}^{n-1}$" den Grenzwert der kollektiven Rotorblattverstellung bezeichnet zu einem vorhergehenden Berechnungszeitpunkt, der dem Zeitpunkt der aktuellen Berechnung vorhergeht, "$\theta^n$" die aktuelle kollektive Rotorblattverstellung bezeichnet, "$\theta_0$" eine Konstante relativ zu einer kollektiven Referenz-Rotorblattverstellung, "=" das Gleichheitszeichen bezeichnet, "+" das Additionszeichen bezeichnet, "-" das Subtraktionszeichen bezeichnet, "*" das Multiplikationszeichen bezeichnet.

**5.** Verfahren zur Unterstützung der Steuerung nach einem der Ansprüche 2 bis 4, **dadurch gekennzeichnet, dass** der zweite Term mit Hilfe der folgenden Beziehung bestimmt wird

$$A2 = B * \sigma * Nr^3$$

wobei "A2" den zweiten Term bezeichnet, "B" den Koeffizienten bezeichnet, "$\sigma$" die Luftdichte bezeichnet, "Nr" einen Parameter bezüglich der Drehgeschwindigkeit des Hauptrotors bezeichnet, "*" das Multiplikationszeichen bezeichnet.

**6.** Verfahren zur Unterstützung der Steuerung nach einem der Ansprüche 2 bis 5, **dadurch gekennzeichnet, dass** der Koeffizient (B) eine Variable ist, die sich in Abhängigkeit von der Vortriebsgeschwindigkeit (IAS) des Luftfahrzeugs (1) ändert.

**7.** Verfahren nach einem der Ansprüche 2 bis 6, **dadurch gekennzeichnet, dass** vor der Umwandlung der begrenzenden Leistungsbandbreite ($\Delta$Wlim) in eine Bandbreite der kollektiven Rotorblattverstellung ($\Delta\theta$) die begrenzende Leistungsbandbreite ($\Delta$Wlim) um einen vorbestimmten Prozentsatz reduziert wird, wenn die Drehgeschwindigkeit des Hauptrotors (2) auf eine vorbestimmte Drehgeschwindigkeit während eines vorbestimmten Zeitraums abnimmt.

**8.** Verfahren nach Anspruch 7,

**dadurch gekennzeichnet, dass** der Prozentsatz von einem Maximum auf den Wert Null während einer vorbestimmten Zeitspanne abnimmt.

9. Verfahren nach einem der Ansprüche 1 bis 8,
**dadurch gekennzeichnet, dass** während einer vorbestimmten aggressiven Flugphase des Luftfahrzeugs (1) das Verfahren einen Schritt des Einfrierens aufweist, während dem der Grenzwert der kollektiven Rotorblattverstellung gleich einem Wert dieses Grenzwertes der kollektiven Rotorblattverstellung gehalten wird, der vor der aggressiven Flugphase erreicht wurde.

10. Verfahren nach Anspruch 9,
**dadurch gekennzeichnet, dass** eine aggressive Flugphase erfasst wird:

- wenn die kollektive Rotorblattverstellung der Rotorblätter (3) des Hauptrotors (2) sich mit einer Geschwindigkeit ändert, die größer ist als ein vorbestimmter hoher Geschwindigkeitsänderungsschwellenwert (K1), oder
- wenn die kollektive Rotorblattverstellung der Rotorblätter (3) des Hauptrotors (2) sich mit einer Geschwindigkeit ändert, die zwischen einem vorbestimmten niedrigen Schwellenwert der Änderung der Geschwindigkeit (K0) und dem hohen Schwellenwert (K1) der Änderung der Geschwindigkeit bei einem Schwellenwert einer Zeitdauer liegt, oder
- wenn eine Änderung einer Drehgeschwindigkeit des Hauptrotors größer ist als ein niedriger Schwellenwert und wenn ein Steuerorgan (9), welches die Rotorblattverstellung (5) eines Hilfsrotors (4) steuert, nicht betätigt wird, oder
- wenn die Änderung der Drehgeschwindigkeit des Hauptrotors größer ist als ein hoher Schwellenwert (K3) und wenn das Steuerorgan (9) betätigt wird.

11. Verfahren nach Anspruch 9,
**dadurch gekennzeichnet, dass** der Schritt des Einfrierens verhindert wird, wenn eine Stellung eines Steuerorgans (9), das die kollektive Rotorblattverstellung der Rotorblätter (5) eines Hilfsrotors (4) steuert, sich mit einer Bewegungsgeschwindigkeit ändert, die größer ist als ein Bewegungsgeschwindigkeitsschwellenwert.

12. Verfahren nach Anspruch 11,
**dadurch gekennzeichnet, dass** der Schritt des Einfrierens nicht verhindert wird, wenn eine Stellung eines Steuerorgans (9), das die kollektive Rotorblattverstellung der Rotorblätter (5) eines Hilfsrotors (4) sich mit einer Bewegungsgeschwindigkeit ändert, die größer ist als ein Bewegungsschwellenwert, und wenn sich die kollektive Rotorblattverstellung der Rotorblätter (3) des Hauptrotors (2) mit einer Geschwindigkeit ändert, die größer ist als ein hoher vorbestimmter Schwellenwert der Änderung der Geschwindigkeit.

13. Verfahren nach einem der Ansprüche 1 bis 12,
**dadurch gekennzeichnet, dass** vor der Anzeige des Grenzwertes der kollektiven Rotorblattverstellung das Verfahren einen Filterungsschritt aufweist, wobei der Grenzwert der kollektiven Rotorblattverstellung zu einem aktuellen Berechnungszeitpunkt bestimmt wird durch Anwendung des folgenden Filters:

$$\theta^n{}_{limdef} = (1 - f) * \theta^{n-1}_{limitdef} + f * \theta^n_{limit} \, ,$$

wobei "$\theta^n{}_{limdef}$" den Grenzwert der kollektiven Rotorblattverstellung am Ende des Filterungsschritts darstellt, "$\theta^{n-1}_{limitdef}$" den Grenzwert der kollektiven Rotorblattverstellung darstellt, gefiltert zum Zeitpunkt der vorhergehenden Berechnung, die dem Zeitpunkt der aktuellen Berechnung vorausgeht, "$\theta^n_{limit}$" den Grenzwert der kollektiven Rotorblattverstellung darstellt, der vor dem Filterungsschritt bestimmt wird, "$f$" eine Filterungskonstante darstellt, "=" das Gleichheitszeichen darstellt, "+" das Additionszeichen darstellt, "-" das Subtraktionszeichen darstellt, "*" das Multiplikationszeichen darstellt.

14. Verfahren nach Anspruch 9 und nach Anspruch 13,
**dadurch gekennzeichnet, dass** der Schritt des Einfrierens ausgeführt wird, indem der Filterungskonstante ein Wert Null gegeben wird.

15. Verfahren nach Anspruch 13,

**dadurch gekennzeichnet, dass** während des Übergangs von einer aggressiven Flugphase in eine vorbestimmte stabilisierte Flugphase des Luftfahrzeugs (1) der Filter während einer vorbestimmten Zeitdauer angewendet wird mit einer Filterungskonstante, die gleich einer vorbestimmten Filterungskonstante ist, die während einer stabilisierten Flugphase dividiert durch vier anzuwenden ist.

16. Verfahren nach einem der Ansprüche 13 bis 15,
    **dadurch gekennzeichnet, dass** der Wert der Filterungskonstante von einem Wert einer "Variable eines Steuerorgans (Fpal)" genannten Variablen abhängt, wobei die Variable eines Steuerorgans (Fpal) sich in Abhängigkeit von einer Bewegungsgeschwindigkeit eines Steuerorgans (9) ändert, das die Rotorblattverstellung (5) eines Hilfsrotors (4) steuert.

17. Verfahren nach einem der Ansprüche 13 bis 16,
    **dadurch gekennzeichnet, dass** der Wert der Filterungskonstante (f) von einem Wert einer "Variable des Vortriebs (Fvit)" genannten Variablen abhängt, wobei die Vortriebsvariable (Fvit) sich in Abhängigkeit von einer Vortriebsgeschwindigkeit (IAS) des Luftfahrzeugs (1) ändert.

18. Verfahren nach Anspruch 16 und Anspruch 17,
    **dadurch gekennzeichnet, dass** der Wert der Filterungskonstante gleich dem Produkt aus einer vorbestimmten Konstante und dem Maximum zwischen der Vortriebsvariablen (Fvit) und der Variablen eines Steuerorgans (Fpal) ist.

19. Vorrichtung zur Unterstützung der Steuerung mit einer Anzeige (70), die einen Grenzwert der kollektiven Rotorblattverstellung anzeigt,
    **dadurch gekennzeichnet, dass** die Vorrichtung zur Unterstützung der Steuerung (10) eine Verarbeitungseinheit (60) aufweist, die ausgebildet ist, um das Verfahren nach einem der Ansprüche 1 bis 18 anzuwenden.

20. Vorrichtung zur Unterstützung der Steuerung nach Anspruch 19, **dadurch gekennzeichnet, dass** die Vorrichtung zur Unterstützung der Steuerung (10) mindestens folgende Organe aufweist:

    - ein Regelungssystem (15), das jeden Motor (6) steuert,
    - ein Messsystem (20), das einen Parameter bezüglich einer kollektiven Rotorblattverstellung der Rotorblätter (3) des Hauptrotors (2) misst,
    - ein Messsystem (25), das einen Parameter bezüglich einer aktuellen Drehgeschwindigkeit des Hauptrotors (2) misst,
    - ein Messsystem (30), das einen Wert bezüglich eines jeden Überwachungsparameters misst,
    - ein Messsystem (40), das einen Wert bezüglich eines Umgebungsluftdrucks (P0), der außerhalb des Luftfahrzeugs (1) herrscht, misst,
    - ein Messsystem (35), das einen Wert bezüglich einer Umgebungslufttemperatur (T0) misst, die außerhalb des Luftfahrzeugs (1) herrscht,
    - ein Messsystem (45), das einen Wert bezüglich einer Vortriebsgeschwindigkeit (IAS) des Luftfahrzeugs (1) misst,
    - ein Messsystem (50), das einen Wert bezüglich einer Stellung eines Steuerorgans (9) misst, welches eine Rotorblattverstellung eines Hilfsrotors (4) des Luftfahrzeugs (1) misst.

21. Luftfahrzeug (1) mit einem Antriebsaggregat mit mindestens einem Motor (6) und einem Hauptrotor (2), der zumindest teilweise zu dem Auftrieb und/oder dem Vortrieb des Luftfahrzeugs (1) beiträgt, **dadurch gekennzeichnet, dass** das Luftfahrzeug (1) ein Drehflügelflugzeug ist, welches eine Vorrichtung zur Unterstützung der Steuerung (10) nach einem der Ansprüche 19 bis 20 aufweist.

**Claims**

1. Method for assisting the piloting of an aircraft (1) equipped with a powerplant that comprises at least one engine (6) and with a main rotor (2) that assists at least partially with the lift and/or propulsion of the aircraft (1), said aircraft being a rotorcraft, each engine (6) being controlled by a control means on the basis of a set point, the powerplant being monitored by determining a value of a plurality of predetermined monitoring parameters (Ng, T4, Q, C), said method including the following steps for at least one operating speed of said at least one engine:

   - determining a power margin, referred to as "limiting power margin ($\Delta$Wlim)", of said powerplant relative to a power limit at said operating speed;
- converting the limiting power margin (ΔWlim) into a collective pitch margin (Δθ) for said operating speed, the collective pitch margin (Δθ) being a margin between a current collective pitch ($\theta^n$) of blades of said main rotor and a collective pitch limit ($\theta_{limit}$) of said blades;
- determining said collective pitch limit ($\theta_{limit}$) and displaying said collective pitch limit ($\theta_{limit}$),

**characterized in that** said conversion of the limiting power margin (ΔWlim) into a collective pitch margin (Δθ) is carried out by applying an algorithm, said algorithm reducing said collective pitch margin (Δθ) relative to an actual collective pitch margin which is proportional to the limiting power margin (ΔWlim) when the power margin is not zero in order to predict said set point induced by said control means being exceeded, said collective pitch margin (Δθ) being zero when the limiting power margin (ΔWlim) is zero.

2. Piloting assistance method according to claim 1, **characterized in that** said algorithm is a recursive algorithm using a main equation which provides, at each current calculation time, said collective pitch margin (Δθ) as a function of a quotient of said limiting power margin (ΔWlim) and a denominator, said denominator being equal to the product of a first term (A1) and a second term (A2), the first term (A1) being a function of the current collective pitch ($\theta^n$) of said blades at said current calculation time (n) and of the collective pitch limit ($\theta_{limit}^{n-1}$) at a previous calculation time (n-1) before said current calculation time (n), said second term (A2) being a function of at least one predetermined coefficient (B) that reduces said power margin of said powerplant.

3. Piloting assistance method according to claim 2, **characterized in that**, in order to determine the limiting power margin (ΔWlim), said method comprises the following steps:

- determining a margin referred to as "individual margin (Δ$Ng$, Δ$t4$, Δ$Q$, Δ$C$)" for each monitoring parameter (Ng, T4, Q, C);
- converting each individual margin into a power margin referred to as "individual power margin (Δ$WNg$, Δ$Wt4$, Δ$WQ$, Δ$WC$)", said limiting power margin (ΔWlim) being equal to the lowest individual power margin.

4. Piloting assistance method according to either claim 2 or claim 3, **characterized in that** said first term is determined using the following equation:

$$A1 = \theta_{limit}^{n-1} + \theta^n - 2 * \theta_0$$

where "A1" is the first term," „$\theta_{limit}^{n-1}$" is the collective pitch limit at the previous calculation time before the current calculation time, "$\theta^n$" is the current collective pitch, "$\theta_0$" is a constant relative to a reference collective pitch, "=" is the equals sign, "+" is the plus sign, "-" is the minus sign and "*" is the multiplication sign.

5. Piloting assistance method according to any of claims 2 to 4, **characterized in that** said second term is determined using the following equation:

$$A2 = B * \sigma * Nr^3$$

where "A2" is the second term, "B" is said coefficient, "σ" is the air density, "Nr" is a parameter relative to the rotation speed of the main rotor and "*" is the multiplication sign.

6. Piloting assistance method according to any of claims 2 to 5, **characterized in that** said coefficient (B) is a variable that varies as a function of the forward speed (IAS) of the aircraft (1).

7. Method according to any of claims 2 to 6, **characterized in that**, prior to the conversion of the limiting power margin (ΔWlim) into a collective pitch margin (Δθ), the limiting power margin (ΔWlim) is reduced by a predetermined percentage if a rotation speed of said main rotor (2) decreases at a predetermined speed for a predetermined time.

8. Method according to claim 7, **characterized in that** said percentage falls from a maximum to a zero value over a predetermined period.

9. Method according to any of claims 1 to 8, **characterized in that**, during a predetermined forward flight phase of the aircraft (1), the method comprises a freezing step during which the collective pitch limit is kept equal to the value of said collective pitch limit reached before said forward flight phase.

10. Method according to claim 9, **characterized in that** a forward flight phase is detected:

  - if the collective pitch of the blades (3) of the main rotor (2) varies at a speed greater than a predetermined high speed variation threshold (K1), or
  - if the collective pitch of the blades (3) of the main rotor (2) varies at a speed between a predetermined low speed variation threshold (K0) and said high speed variation threshold (K1) for a duration threshold, or
  - if a variation of a rotation speed of said main rotor is greater than a low threshold and if a controller (9) that controls the pitch of blades (5) of an auxiliary rotor (4) is not operated, or
  - if the variation of the rotation speed of said main rotor is greater than a high threshold (K3) and if said controller (9) is operated.

11. Method according to claim 9, **characterized in that** said freezing step is impeded if a position of a controller (9) that controls the pitch of blades (5) of an auxiliary rotor (4) varies at a traveling speed greater than a threshold traveling speed.

12. Method according to claim 11, **characterized in that** said freezing step is not impeded if a position of a controller (9) that controls the pitch of blades (5) of an auxiliary rotor (4) varies at a traveling speed greater than a traveling threshold and if the collective pitch of the blades (3) of the main rotor (2) varies at a speed greater than a predetermined high speed variation threshold.

13. Method according to any of claims 1 to 12, **characterized in that**, prior to displaying the collective pitch limit, said method comprises a filtering step, the collective pitch limit being determined at a current calculation time by applying the following filter:

$$\theta^n{}_{limdef} = (1 - f) * \theta^{n-1}_{limitdef} + f * \theta^n_{limit}$$

where "$\theta^n{}_{limdef}$" is the collective pitch limit after the filtering step, "$\theta^{n-1}_{limitdef}$" is the filtered collective pitch limit at the previous calculation time before the current calculation time, "$\theta^n_{limit}$" is the collective pitch limit determined before the filtering step, "$f$" is a filtering constant, "=" is the equals sign, "+" is the plus sign, "-" is the minus sign and "*" is the multiplication sign.

14. Method according to claim 9 and claim 13, **characterized in that** the freezing step is achieved by assigning a zero value to said filtering constant.

15. Method according to claim 13, **characterized in that**, when the flight phase referred to as the forward flight phase passes into a predetermined stable flight phase of the aircraft (1), said filter is applied, for a predetermined time, with a filtering constant equal to a predetermined filtering constant to be applied during the stable flight phase divided by four.

16. Method according to any of claims 13 to 15, **characterized in that** the value of the filtering constant is a function of a value of a variable referred to as "controller variable (Fpal)", the controller variable (Fpal) varying as a function of a traveling speed of a controller (9) that controls the pitch of blades (5) of an auxiliary rotor (4).

17. Method according to any of claims 13 to 16, **characterized in that** the value of the filtering constant (f) is a function of a value of a variable referred to as "forward variable "(Fvit)", the forward variable (Fvit) varying as a function of a forward speed (IAS) of the aircraft (1).

18. Method according to claim 16 and claim 17, **characterized in that** the value of the filtering constant is equal to the product of a predetermined constant and of the maximum between the forward variable (Fvit) and the variable of a controller (Fpal).

19. Piloting assistance device including a display unit (70) that displays a collective pitch limit, **characterized in that** said piloting assistance device (10) comprises a processing unit (60) configured to apply the method according to any of claims 1 to 18.

20. Piloting assistance device according to claim 19, **characterized in that** said piloting assistance device (10) comprises at least one of the following elements:

- a control system (15) that controls each engine (6);
- a measuring system (20) that measures a parameter relative to a collective pitch of blades (3) of the main rotor (2);
- a measuring system (25) that measures a parameter relative to a current rotation speed of the main rotor (2);
- a measuring system (30) that measures a value relative to each monitoring parameter;
- a measuring system (40) that measures a value relative to a pressure (P0) of the ambient air present outside the aircraft (1);
- a measuring system (35) that measures a value relative to a temperature (T0) of the ambient air present outside the aircraft (1);
- a measuring system (45) that measures a value relative to a forward speed (IAS) of the aircraft (1);
- a measuring system (50) that measures a value relative to a position of a controller (9) that controls a pitch of blades of an auxiliary rotor (4) of the aircraft (1).

21. Aircraft (1) equipped with a powerplant comprising at least an engine (6) and a main rotor (2) that assists at least partially with the lift and/or propulsion of the aircraft (1), **characterized in that** said aircraft (1) is a rotorcraft which comprises a piloting assistance device (10) according to either claim 19 or claim 20.

Fig.1

Fig.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2749545 A
- FR 2756256
- FR 2973340
- EP 2518582 A
- FR 28029082